# EUROPEAN PATENT APPLICATION

(11) **EP 2 735 596 A1**
(43) Date of publication of application: **28.05.2014**
(21) Application number: 12815310.3
(22) Date of filing: 13.07.2012
(51) Int. Cl.: C09J 201/00, C09J 7/00, C09J 11/04, C09J 121/00, C09J 133/00, C09J 183/04

(54) **TRANSPARENT ADHESIVE/BONDING AGENT AND HIGH-TEMPERATURE MAINTAINING STICKY AGENT**

(30) Priority: 19.07.2011 JP 2011158006; 05.07.2012 JP 2012151226; 05.07.2012 JP 2012151227; 05.07.2012 JP 2012151228; 05.07.2012 JP 2012151229
(71) Applicant: Nitto Denko Corporation, Ibaraki-shi, Osaka 567-8680 (JP)
(72) Inventor: SUGINO, Yusuke, Ibaraki-shi Osaka 567-8680 (JP); NAGASAKI, Kunio, Ibaraki-shi Osaka 567-8680 (JP); DOI, Kohei, Ibaraki-shi Osaka 567-8680 (JP); HIDA, Takafumi, Ibaraki-shi Osaka 567-8680 (JP); NAKAYAMA, Yusuke, Ibaraki-shi Osaka 567-8680 (JP)
(74) Representative: Müller-Boré & Partner Patentanwälte PartG mbB
(86) International application number: PCT/JP2012/067948
(87) International publication number: WO 2013/011946

(57) **Abstract**

Provided is a transparent pressure-sensitive adhesive agent convertible into an adhesive agent that allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and has such transparency as to hardly impair the designs of the adherends. The transparent pressure-sensitive adhesive agent convertible into an adhesive agent has pressure-sensitive adhesive property before being sintered, and has adhesive property after being sintered.

## Description

### Technical Field

The present invention relates to a transparent pressure-sensitive adhesive agent convertible into an adhesive agent (hereinafter sometimes referred to as "transparent convertible pressure-sensitive adhesive agent"). Specifically, the present invention relates to a transparent convertible pressure-sensitive adhesive agent having sinterability, the transparent pressure-sensitive adhesive agent having pressure-sensitive adhesive property before being sintered, and having adhesive property after being sintered.

The present invention also relates to a high temperature-resistant pressure-sensitive adhesive agent. The high temperature-resistant pressure-sensitive adhesive agent of the present invention is, for example, capable of forming a pressure-sensitive adhesive member (such as a pressure-sensitive adhesive film or a pressure-sensitive adhesive tape) by being attached to a backing or the like, and even when the pressure-sensitive adhesive member is attached to an adherend (such as glass) and exposed to a high-temperature environment, its pressure-sensitive adhesive strength can be maintained.

### Background Art

A sinterable adhesive agent typified by an aqueous dispersion of inorganic particles (see, for example, Patent Literature 1) does not have pressure-sensitive adhesive property. Therefore, the sinterable adhesive agent involves difficulty in reattachment of adherends to each other. In addition, such sinterable adhesive agent requires time or heat treatment before achieving fixation after being applied, and hence is difficult to cut into a sheet shape by punching or the like.

On the other hand, a pressure-sensitive adhesive agent (see, for example, Patent Literature 2) has an advantage of allowing adherends to be instantly fixed to each other. However, there is a problem in that, when exposed to a high-temperature atmosphere such as one in a fire, the pressure-sensitive adhesive agent is peeled from the adherends owing to decomposition of its polymer component.

In view of the foregoing, there is a demand for development of a convertible pressure-sensitive adhesive agent that allows adherends to be instantly fixed to each other, allows the adherends to be reattached to each other, is excellent in processability such as being able to be cut into a sheet shape, and is not peeled from the adherends even when exposed to a high-temperature atmosphere such as one in a fire.

Further, when the convertible pressure-sensitive adhesive agent has low transparency, there may arise a problem in that designs of the adherends are impaired.

### Citation List

### Patent Literature

[PTL 1] JP 2002-173379 A
[PTL 2] JP 2005-082775 A

### Summary of Invention

### Technical Problem

An object of the present invention is to provide a transparent convertible pressure-sensitive adhesive agent that allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and has such transparency as to hardly impair the designs of the adherends.

Another object of the present invention is to provide a high temperature-resistant pressure-sensitive adhesive agent that allows adherends to be instantly fixed to each other and is not peeled from the adherends even when exposed to a high-temperature atmosphere such as one in a fire.

### Solution to Problems

A transparent convertible pressure-sensitive adhesive agent of the present invention has pressure-sensitive adhesive property before being sintered, and has adhesive property after being sintered.

In a preferred embodiment, the transparent convertible pressure-sensitive adhesive agent of the present invention includes sinterable particles and a polymer component.

In a preferred embodiment, a difference between a refractive index of each of the sinterable particles and a refractive index of the polymer component is 0.02 or less.

In a preferred embodiment, the deformation point of each of the sinterable particles is 250°C to 800°C.

In a preferred embodiment, the sinterable particles are each formed of at least one kind of component selected from silicic acid, boric acid, borosilicic acid, aluminum oxide, calcium oxide, sodium oxide, lithium oxide, and phosphorus oxide.

In a preferred embodiment, the average particle diameter of the sinterable particles is 0.1 µm to 1,000 µm.

In a preferred embodiment, the content ratio of the sinterable particles is 1 wt% to 150 wt% with respect to a solid content of the transparent convertible pressure-sensitive adhesive agent.

In a preferred embodiment, the polymer component is at least one kind of component selected from a rubber-based polymer, a silicone-based polymer, and an acrylic polymer.

In a preferred embodiment, the polymer component has a cross-linked structure.

In a preferred embodiment, all monomer components for forming the polymer component contain a cross-linking monomer at a content ratio of 2.0 wt% to 60 wt%.

In a preferred embodiment, the cross-linking monomer has at least one kind of functional group selected from an acryloyl group, an epoxy group, an isocyanate group, a carboxyl group, a hydroxyl group, a vinyl group, and an amino group.

In a preferred embodiment, the polymer component contains an antioxidant.

In a preferred embodiment, a content ratio of the antioxidant is 0.1 wt% to 10 wt% with respect to the solid content of the transparent convertible pressure-sensitive adhesive agent.

In a preferred embodiment, the antioxidant is at least one kind selected from a phenol-based antioxidant, an amine-based antioxidant, an amino ether-based antioxidant, and a phosphorus-based antioxidant.

In a preferred embodiment, the transparent convertible pressure-sensitive adhesive agent of the present invention has a total light transmittance of 80% or more.

In a preferred embodiment, the transparent convertible pressure-sensitive adhesive agent of the present invention has a haze value of 30 or less.

In a preferred embodiment, the transparent convertible pressure-sensitive adhesive agent of the present invention has a sheet shape.

In a preferred embodiment, the transparent convertible pressure-sensitive adhesive agent of the present invention has a thickness of 1 µm to 1,000 µm.

In a preferred embodiment, a material for forming the polymer component contains a photopolymerization initiator.

In a preferred embodiment, the transparent convertible pressure-sensitive adhesive agent of the present invention is obtained through photopolymerization.

A production method for a transparent convertible pressure-sensitive adhesive agent of the present invention is a production method for the transparent convertible pressure-sensitive adhesive agent, the production method including: partially polymerizing a polymerizable composition for forming a polymer component, the polymerizable composition containing a monomer component and a photopolymerization initiator, to prepare a polymerizable syrup; adding sinterable particles to the polymerizable syrup, followed by uniform dispersion of the sinterable particles in the polymerizable syrup; and curing the dispersion through photopolymerization by photoirradiation.

A high temperature-resistant pressure-sensitive adhesive agent of the present invention is a pressure-sensitive adhesive agent including a polymer component, characterized in that: the high temperature-resistant pressure-sensitive adhesive agent has a pressure-sensitive adhesive strength for glass at 23°C of 1.0 N/10 mm or more; and under a state in which a glass plate A measuring 30 mm long by 30 mm wide by 3 mm thick and a glass plate B measuring 50 mm long by 30 mm wide by 3 mm thick are attached and fixed to each other with the high temperature-resistant pressure-sensitive adhesive agent having a size of 30 mm long by 30 mm wide in such a manner that the glass plate A and the glass plate B overlap each other in a region measuring 30 mm long by 30 mm wide, when the glass plate B is suspended with an end portion thereof where the glass plate A is not attached being fixed at a height of 150 mm, and is left at rest in a 400°C atmosphere for 30 minutes, the glass plate A does not fall.

In a preferred embodiment, the polymer component is at least one kind selected from a rubber-based polymer, a silicone-based polymer, and an acrylic polymer.

In a preferred embodiment, a material for forming the polymer component contains a photopolymerization initiator.

In a preferred embodiment, the high temperature-resistant pressure-sensitive adhesive agent of the present invention further includes inorganic particles.

In a preferred embodiment, the high temperature-resistant pressure-sensitive adhesive agent of the present invention has a sheet shape.

In a preferred embodiment, the high temperature-resistant pressure-sensitive adhesive agent of the present invention has a thickness of 1 µm to 1,000 µm.

In a preferred embodiment, the high temperature-resistant pressure-sensitive adhesive agent of the present invention is obtained through photopolymerization.

### Advantageous Effects of Invention

According to an embodiment of the present invention, it is possible to provide the transparent convertible pressure-sensitive adhesive agent that allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and has such transparency as to hardly impair the designs of the adherends. In addition, the polymer component that may be contained in the transparent convertible pressure-sensitive adhesive agent can be designed to impart extremely excellent heat resistance to the transparent convertible pressure-sensitive adhesive agent of the present invention.

In addition, according to another embodiment of the present invention, it is possible to provide the high temperature-resistant pressure-sensitive adhesive agent that allows adherends to be instantly fixed to each other and is not peeled from the adherends even when exposed to a high-temperature atmosphere such as one in a fire.

### Brief Description of Drawings

FIG. **1** is an example of a schematic sectional view of a transparent convertible pressure-sensitive adhesive agent of the present invention.
FIG. **2** is an example of a schematic sectional view of a high temperature-resistant pressure-sensitive adhesive agent of the present invention.
FIG. **3** is a schematic view of a method of evaluating peeling property in the case of exposure to a high-temperature atmosphere.
FIG. **4** is a schematic view of a method of evaluating high-temperature pressure-sensitive adhesive property and high-temperature adhesive property.
Fig. **5** is a schematic view illustrating a method of evaluating high-temperature (pressure-sensitive) adhesive property.

### Description of Embodiments

### «Transparent convertible pressure-sensitive adhesive agent»

A transparent convertible pressure-sensitive adhesive agent of the present invention has high transparency. By virtue of the fact that the transparent convertible pressure-sensitive adhesive agent of the present invention has high transparency, the design of an adherend is hardly impaired.

The transparent convertible pressure-sensitive adhesive agent of the present invention has a total light transmittance of preferably 80% or more, more preferably 85% or more, still more preferably 88% or more, particularly preferably 90% or more.

The transparent convertible pressure-sensitive adhesive agent of the present invention has a haze value of preferably 30 or less, more preferably 20 or less, still more preferably 15 or less, particularly preferably 10 or less, most preferably 6 or less.

The transparent convertible pressure-sensitive adhesive agent of the present invention has pressure-sensitive adhesive property before being sintered, and has adhesive property after being sintered. Herein, the transparent convertible pressure-sensitive adhesive agent of the present invention means a convertible pressure-sensitive adhesive agent before being sintered. That is, the transparent convertible pressure-sensitive adhesive agent of the present invention has pressure-sensitive adhesive property as it is, and its adhesive property is expressed by performing sintering.

The term "pressure-sensitive adhesive" as used in the present invention refers to, as defined in JIS, a kind of adhesive property that is temporary and can be exerted by applying only a slight pressure. In addition, the property involves cohesive strength and elasticity, and hence allows peeling from a hard smooth surface while exerting strong adhesive property. A pressure-sensitive adhesive agent is a soft solid, and does not cause a change in state unlike an adhesive agent. The pressure-sensitive adhesive agent wets an adherend and resists peeling while keeping its original state, and hence can instantly exert adhesive strength on a practical level upon attachment of adherends to each other. That is, the pressure-sensitive adhesive agent has liquid property to wet an adherend (fluidity) in combination with solid property to resist peeling (cohesive strength). The pressure-sensitive adhesive agent is a soft solid, and hence its contact area with an adherend gradually increases through the application of a pressure or the passing of time. In addition, the pressure-sensitive adhesive agent can keep the softness for a long time period, and hence has property of allowing peeling to be performed when the peeling is desired.

The term "adhesive" as used in the present invention refers to, as defined in JIS, property of allowing surfaces of solids of the same kind or different kinds to be attached to each other into integration. An adhesive agent is a liquid having fluidity when adherends are attached to each other, and wets the adherends and conforms thereto. After that, the adhesive agent is converted to a solid by heating or chemical reaction to firmly bond the adherends at their interface and to exert the ability to resist peeling. That is, the adhesive agent wets an adherend as a liquid and exerts adhesive property as a solid.

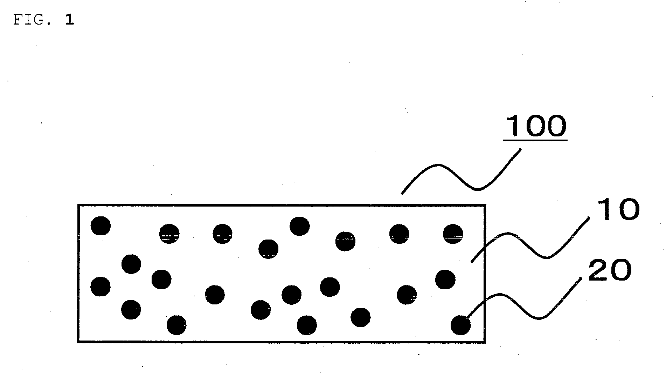

The transparent convertible pressure-sensitive adhesive agent of the present invention contains sinterable particles and a polymer component. FIG. **1** is an example of a schematic sectional view of the transparent convertible pressure-sensitive adhesive agent of the present invention. A transparent convertible pressure-sensitive adhesive agent 100 of the present invention has sinterable particles **20** dispersed in a polymer component **10**.

The content ratio of the sinterable particles in the transparent convertible pressure-sensitive adhesive agent of the present invention is preferably 1 wt% to 150 wt%, more preferably 2 wt% to 120 wt%, still more preferably 3 wt% to 100 wt%, still more preferably 4 wt% to 80 wt%, still more preferably 5 wt% to 70 wt%, still more preferably 10 wt% to 60 wt%, particularly preferably 20 wt% to 50 wt% with respect to the solid content of the transparent convertible pressure-sensitive adhesive agent. When the content ratio of the sinterable particles in the transparent convertible pressure-sensitive adhesive agent of the present invention falls within the range, there can be sufficiently expressed such an effect that the transparent convertible pressure-sensitive adhesive agent is extremely hardly peeled from an adherend even when exposed to a high-temperature atmosphere such as one in a fire.

The deformation point of each of the sinterable particles in the transparent convertible pressure-sensitive adhesive agent of the present invention is preferably 250°C to 800°C, more preferably 250°C to 700°C, still more preferably 250°C to 600°C, particularly preferably 250°C to 500°C. When the deformation point of each of the sinterable particles in the transparent convertible pressure-sensitive adhesive agent of the present invention falls within the range, there can be sufficiently expressed such an effect that the transparent convertible pressure-sensitive adhesive agent is extremely hardly peeled from an adherend even when exposed to a high-temperature atmosphere such as one in a fire.

Any appropriate sinterable particles may be adopted as the sinterable particles in the transparent convertible pressure-sensitive adhesive agent of the present invention. Such sinterable particles are preferably inorganic particles each having sinterability, more preferably sinterable particles each formed of at least one kind of component selected from silicic acid, boric acid, borosilicic acid, aluminum oxide, calcium oxide, sodium oxide, lithium oxide, and phosphorus oxide. When such sinterable particles are adopted, there can be sufficiently expressed such an effect that the transparent convertible pressure-sensitive adhesive agent is extremely hardly peeled from an adherend even when exposed to a high-temperature atmosphere such as one in a fire.

The average particle diameter of the sinterable particles in the transparent convertible pressure-sensitive adhesive agent of the present invention is preferably 0.1 µm to 1, 000 µm, more preferably 0.5 µm to 500 µm, still more preferably 1 µm to 300 µm, particularly preferably 2 µm to 150 µm. When the average particle diameter of the sinterable particles in the transparent convertible pressure-sensitive adhesive agent of the present invention falls within the range, there can be sufficiently expressed such an effect that the transparent convertible pressure-sensitive adhesive agent is extremely hardly peeled from an adherend even when exposed to a high-temperature atmosphere such as one in a fire.

The polymer component in the transparent convertible pressure-sensitive adhesive agent of the present invention preferably contains an antioxidant. When the polymer component in the transparent convertible pressure-sensitive adhesive agent of the present invention contains the antioxidant, the transparent convertible pressure-sensitive adhesive agent of the present invention can express extremely excellent heat resistance.

The content ratio of the antioxidant in the transparent convertible pressure-sensitive adhesive agent of the present invention is preferably 0.1 wt% to 10 wt%, more preferably 0.3 wt% to 8 wt%, still more preferably 0.5 wt% to 6 wt%, particularly preferably 0.7 wt% to 5 wt% with respect to the solid content of the transparent convertible pressure-sensitive adhesive agent. When the content ratio of the antioxidant falls within the range, the transparent convertible pressure-sensitive adhesive agent of the present invention can express extremely excellent heat resistance to an additional degree. The antioxidants may be used alone or in combination.

Any appropriate antioxidant may be adopted as the antioxidant. Such antioxidant is preferably exemplified by at least one kind selected from a phenol-based antioxidant, an amine-based antioxidant, an amino ether-based antioxidant, and a phosphorus-based antioxidant.

Examples of the phenol-based antioxidant may include: monocyclic phenol compounds such as 2,6-di-t-butyl-p-cresol, 2,6-di-t-butyl-4-ethylphenol, 2,6-dicyclohexyl-4-methylphenol, 2,6-diisopropyl-4-ethylphenol, 2,6-di-t-amyl-4-methylphenol, 2,6-di-t-octyl-4-n-propylphenol, 2,6-dicyclohexyl-4-n-octylphenol, 2-isopropyl-4-methyl-6-t-butylphenol, 2-t-butyl-4-ethyl-6-t-octylphenol, 2-isobutyl-4-ethyl-6-t-hexylphenol, 2-cyclohexyl-4-n-butyl-6-isopropylphenol, styrenatedmixedcresol, DL-α-tocopherol, and stearyl β-(3,5-di-t-butyl-4-hydroxyphenyl) propionate; bicyclic phenol compounds such as 2,2'-methylenebis(4-methyl-6-t-butylphenol), 4,4'-butylidenebis(3-methyl-6-t-butylphenol), 4,4'-thiobis(3-methyl-6-t-butylphenol), 2,2'-thiobis(4-methyl-6-t-butylphenol), 4,4'-methylenebis(2,6-di-t-butylphenol), 2,2'-methylenebis[6-(1-methylcyclohexyl)-p-cresol], 2,2'-ethylidenebis(4,6-di-t-butylphenol), 2,2'-butylidenebis(2-t-butyl-4-methylphenol), 3,6-dioxaoctamethylenebis[3-(3-t-butyl-4-hydroxy-5-methylpheny l) propionate], triethylene glycol-bis[3-(3-t-butyl-5-methyl-4-hydroxyphenyl) propionate], 1,6-hexanediolbis[3-(3,5-di-t-butyl-4-hydroxyphenyl) propionate], and 2,2'-thiodiethylenebis[3-(3,5-di-t-butyl-4-hydroxyphenyl) propionate]; tricyclic phenol compounds such as 1,1,3-tris(2-methyl-4-hydroxy-5-t-butylphenyl)butane, 1,3,5-tris(2,6-dimethyl-3-hydroxy-4-t-butylbenzyl)isocyanurate, 1,3,5-tris[(3,5-di-t-butyl-4-hydroxyphenyl)propionyloxyethyl] isocyanurate, tris(4-t-butyl-2,6-dimethyl-3-hydroxybenzyl) isocyanurate, and 1,3,5-trimethyl-2,4,6-tris(3,5-di-t-butyl-4-hydroxybenzyl)benz ene; tetracyclic phenol compounds such as tetrakis[methylene-3-(3,5-di-t-butyl-4-hydroxyphenyl) propionate]methane; and phosphorus-containing phenol compounds such as calcium bis(ethyl 3,5-di-t-butyl-4-hydroxybenzyl phosphonate) and nickel bis(ethyl 3,5-di-t-butyl-4-hydroxybenzyl phosphonate).

Examples of the amine-based antioxidant include bis(2,2,6,6-tetramethyl-4-piperidyl) sebacate, a polycondensate of dimethyl succinate and 1-(2-hydroxyethyl)-4-hydroxy-2,2,6,6-tetramethylpiperidineetha nol, N,N',N'',N'''-tetrakis-(4,6-bis-(butyl-(N-methyl-2,2,6,6-tetra methylpiperidin-4-yl)amino)-triazin-2-yl)-4,7-diazadecane-1,10 -diamine, a polycondensate of dibutylamine·1,3,5-triazine·N,N'-bis(2,2,6,6-tetramethyl-4-pip eridyl-1,6-hexamethylenediamine) and N-(2,2,6,6-tetramethyl-4-piperidyl)butylamine, poly[{6-(1,1,3,3-tetramethylbutyl)amino-1,3,5-triazine-2,4-diy 1}{(2,2,6,6-tetramethyl-4-piperidyl)imino}hexamethylene{(2,2,6 ,6-tetramethyl-4-piperidyl)imino}], tetrakis(2,2,6,6-tetramethyl-4-piperidyl)-1,2,3,4-butane tetracarboxylate, 2,2,6,6-tetramethyl-4-piperidyl benzoate, bis-(1,2,6,6-pentamethyl-4-piperidyl)-2-(3,5-di-t-butyl-4-hydr oxybenzyl)-2-n-butyl malonate, bis-(N-methyl-2,2,6,6-tetramethyl-4-piperidyl) sebacate, 1,1'-(1,2-ethanediyl)bis(3,3,5,5-tetramethylpiperazinone), (mixed 2,2,6,6-tetramethyl-4-piperidyl/tridecyl)-1,2,3,4-butane tetracarboxylate, (mixed 1,2,2,6,6-pentamethyl-4-piperidyl/tridecyl)-1,2,3,4-butane tetracarboxylate, mixed [2,2,6,6-tetramethyl-4-piperidyl/β,β,β',β'-tetramethyl-3,9-[2, 4,8,10-tetraoxaspiro(5,5)undecane]diethyl]-1,2,3,4-butane tetracarboxylate, mixed [1,2,2,6,6-pentamethyl-4-piperidyl/(β,β,β',β'-tetramethyl-3,9-[ 2,4,8,10-tetraoxaspiro(5,5)undecane]diethyl]-1,2,3,4-butane tetracarboxylate, an N,N'-bis(3-aminopropyl)ethylenediamine-2,4-bis[N-butyl-N-(1,2, 2,6,6-pentamethyl-4-piperidyl)amino]-6-chloro-1,3,5-triazine condensate, poly[6-N-morpholyl-1,3,5-triazine-2,4-diyl][(2,2,6,6-tetrameth yl-4-piperidyl)imino]hexamethylene[(2,2,6,6-tetramethyl-4-pipe ridyl)imide], a condensate of N,N'-bis(2,2,6,6-tetramethyl-4-piperidyl)hexamethylenediamine and 1,2-dibromoethane, and N-(2,2,6,6-tetramethyl-4-piperidyl)-2-methyl.

Examples of the amino ether-based antioxidant include bis(2,2,6,6-tetramethyl-4-piperidyl) sebacate, bis(1,2,2,6,6-pentamethyl-4-piperidyl) sebacate, bis(1-methoxy-2,2,6,6-tetramethyl-4-piperidyl) sebacate, bis(1-ethoxy-2,2,6,6-tetramethyl-4-piperidyl) sebacate, bis(1-propoxy-2,2,6,6,-tetramethyl-4-piperidyl) sebacate, bis(1-butoxy-2,2,6,6-tetramethyl-4-piperidyl) sebacate, bis(1-pentyloxy-2,2,6,6-tetramethyl-4-piperidyl) sebacate, bis(1-hexyloxy-2,2,6,6-tetramethyl-4-piperidyl) sebacate, bis(1-heptyloxy-2,2,6,6-tetramethyl-4-piperidyl) sebacate, bis(1-octoxy-2,2,6,6-tetramethyl-4-piperidyl) sebacate, bis(1-nonyloxy-2,2,6,6-tetramethyl-4-piperidyl) sebacate, bis(1-decanyloxy-2,2,6,6-tetramethyl-4-piperidyl) sebacate, and bis(1-dodecyloxy-2,2,6,6-tetramethyl-4-piperidyl) sebacate.

Examples of the phosphorus-based antioxidant include triphenylphosphite, diphenylisodecylphosphite, phenyldiisodecyl phosphite, 4,4'-butylidene-bis(3-methyl-6-t-butylphenylditridecyl) phosphite, cyclic neopentanetetraylbis(nonylphenyl) phosphite, cyclic neopentanetetraylbis(dinonylphenyl) phosphite, cyclic neopentane tetrayltris(nonylphenyl) phosphite, cyclic neopentane tetrayltris(dinonylphenyl) phosphite, 10-(2,5-dihydroxyphenyl)-10H-9-oxa-10-phosphaphenanthrene-10-o xide, diisodecyl pentaerythritol diphosphite, and tris(2,4-di-t-butylphenyl) phosphite.

The polymer component in the transparent convertible pressure-sensitive adhesive agent of the present invention preferably has a cross-linked structure. When the polymer component in the transparent convertible pressure-sensitive adhesive agent of the present invention has the cross-linked structure, the transparent convertible pressure-sensitive adhesive agent of the present invention can express extremely excellent heat resistance.

The cross-linked structure may be constructed by any appropriate method. The cross-linked structure is preferably constructed by incorporating a cross-linking monomer into all monomer components for forming the polymer component. In this case, the content ratio of the cross-linking monomer in all monomer components for forming the polymer component is preferably 2.0 wt% to 60 wt%, more preferably 3.0 wt% to 57 wt%, still more preferably 5.0 wt% to 55 wt%, particularly preferably 7.0 wt% to 53 wt%, most preferably 8.0 wt% to 50 wt%. When the content ratio of the cross-linking monomer falls within the range, the transparent convertible pressure-sensitive adhesive agent of the present invention can express extremely excellent heat resistance to an additional degree.

The cross-linking monomers may be used alone or in combination.

Any appropriate cross-linking monomer may be adopted as the cross-linking monomer as long as the monomer can construct the cross-linked structure. As such cross-linking monomer, there is preferably given a cross-linking monomer having at least one kind of functional group selected from an acryloyl group, an epoxy group, an isocyanate group, a carboxyl group, a hydroxyl group, a vinyl group, and an amino group. Specific examples of such cross-linking monomer include polyfunctional monomers to be described later.

The content ratio of the polymer component in the transparent convertible pressure-sensitive adhesive agent of the present invention is preferably 20 wt% to 99 wt%, more preferably 30 wt% to 95 wt%, still more preferably 40 wt% to 90 wt%, particularly preferably 50 wt% to 80 wt% with respect to the solid content of the transparent convertible pressure-sensitive adhesive agent. When the content ratio of the polymer component in the transparent convertible pressure-sensitive adhesive agent of the present invention falls within the range, there can be sufficiently expressed such an effect that the transparent convertible pressure-sensitive adhesive agent is extremely hardly peeled from an adherend even when exposed to a high-temperature atmosphere such as one in a fire.

Any appropriate polymer component may be adopted as the polymer component in the transparent convertible pressure-sensitive adhesive agent of the present invention as long as the polymer component can express pressure-sensitive adhesive property. Such polymer component is preferably at least one kind of component selected from a rubber-based polymer, a silicone-based polymer, and an acrylic polymer. The polymer components in the transparent convertible pressure-sensitive adhesive agent of the present invention may be used alone or in combination.

Any appropriate rubber-based polymer that can express pressure-sensitive adhesive property may be adopted as the rubber-based polymer.

Any appropriate silicone-based polymer that can express pressure-sensitive adhesive property may be adopted as the silicone-based polymer.

Any appropriate acrylic polymer that can express pressure-sensitive adhesive property may be adopted as the acrylic polymer. The acrylic polymer may be preferably formed from monomer components essentially containing an acrylic monomer. The content ratio of the acrylic monomer in all monomers that may be used for forming the acrylic polymer is preferably 50 wt% to 100 wt%, morse preferably 55 wt% to 98 wt%, still more preferably 60 wt% to 95 wt%, particularly preferably 65 wt% to 93 wt%. The acrylic monomers may be used alone or in combination.

A preferred example of the acrylic monomer is an alkyl (meth)acrylate having an alkyl group. The alkyl (meth)acrylates each having an alkyl group may be used alone or in combination. It should be noted that the term "(meth)acryl" refers to "acryl" and/or "methacryl."

Examples of the alkyl (meth)acrylate having an alkyl group include an alkyl (meth)acrylate having a linear or branched alkyl group, and an alkyl (meth)acrylate having a cyclic alkyl group. It should be noted that the alkyl (meth)acrylate as used herein means a monofunctional alkyl (meth)acrylate.

Examples of the alkyl (meth)acrylate having a linear or branched alkyl group include alkyl (meth)acrylates each having an alkyl group having 1 to 20 carbon atoms such as methyl (meth) acrylate, ethyl meth(acrylate), propyl (meth)acrylate, isopropyl (meth)acrylate, butyl (meth)acrylate, isobutyl (meth)acrylate, sec-butyl (meth)acrylate, tert-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of those, an alkyl (meth)acrylate having an alkyl group having 2 to 14 carbon atoms is preferred, and an alkyl (meth)acrylate having an alkyl group having 2 to 10 carbon atoms is more preferred.

Examples of the alkyl (meth)acrylate having a cyclic alkyl group include cyclopentyl (meth)acrylate, cyclohexyl (meth)acrylate, and isobornyl (meth)acrylate.

A polyfunctional monomer may be used as a monomer component that can form the acrylic polymer. Any appropriate polyfunctional monomer may be adopted as the polyfunctional monomer. When the polyfunctional monomer is adopted, a cross-linked structure can be imparted to the acrylic polymer. The polyfunctional monomers may be used alone or in combination.

Examples of the polyfunctional monomer include 1, 9-nonanediol di(meth)acrylate,1,6-hexanediol di(meth)acrylate, 1,4-butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, 4-hydroxybutyl acrylate glycidyl ether, glycidyl (meth)acrylate, 2-hydroxyethyl (meth)acrylate, 2-hydroxypropyl (meth)acrylate, butanediol (meth)acrylate, 2-hydroxyethyl (meth) acrylate, 4-hydroxybutyl (meth)acrylate, 2-isocyanatoethyl acrylate glycidyl ether, isocyanatoethyl (meth)acrylate, isocyanato (meth)acrylate, triglycidyl isocyanurate, (meth)acrylic acid, phthalic acid monohydroxyethyl (meth) acrylate, hexahydrophthalic acid monohydroxyethyl (meth) acrylate, 2-hydroxyethyl (meth) acrylate, 2-hydroxypropyl (meth)acrylate, 4-hydroxybutyl (meth)acrylate, dimethyl (meth)acrylamide, diethyl (meth)acrylamide, isopropyl (meth)acrylamide, hydroxyethyl (meth)acrylamide, 1,4-butanediol diglycidyl ether, 1,2-ethanediol diglycidyl ether, polyethylene glycol diglycidyl ether, neopentyl glycol diglycidyl ether, trimethylolpropane polyglycidyl ether, hexamethylene diisocyanate, tolylene diisocyanate, diphenylmethane diisocyanate, triphenylmethane triisocyanate, methyltriisocyanatosilane, tetraisocyanatosilane, polyisocyanate, oxalic acid, malonic acid, succinic acid, glutaric acid, adipic acid, pimelic acid, suberic acid, azelaic acid, sebacic acid, phthalic acid, isophthalic acid, 1,2,3-propanetricarboxylic acid, ethylene glycol, diethylene glycol, propylene glycol, dipropylene glycol, neopentyl glycol, 1,4-butanediol, 1,6-hexanediol, 3-methyl-1,5-pentanediol, 1,2,4-butanetriol, polyoxypropylenetriol, trimethylolethane, trimethylolpropane, aminomethanol, 2-aminoethanol, 3-amino-1-propanol, diethanolamine, triethanolamine, N,N-di-n-butylethanolamine, ethylenediamine, hexamethylenediamine, tolylenediamine, hydrogenated tolylenediamine, diphenylmethanediamine, hydrogenated diphenylmethanediamine, tolidineamine, naphthalenediamine, isophoronediamine, xylenediamine, hydrogenated xylenediamine, vinylamine, 2-(2-thienyl)vinylamine, 1-(allyloxy)vinylamine, allyl alcohol, 1,3-butadiene monoepoxide, and 1-vinyl-3,4-epoxycyclohexane. Of those, from the viewpoint of high reactivity, an acrylate-based polyfunctional monomer is preferred, and 1,9-nonanediol di(meth)acrylate, 1,6-hexanediol di(meth)acrylate, and 4-hydroxybutyl acrylate glycidyl ether are more preferred.

A polar group-containing monomer may be used as a monomer component that can form the acrylic polymer. Any appropriate polar group-containing monomer may be adopted as the polar group-containing monomer. When the polar group-containing monomer is adopted, the cohesive strength of the acrylic polymer can be improved, or the pressure-sensitive adhesive strength of the acrylic polymer can be improved. The polar group-containing monomers may be used alone or in combination.

Examples of the polar group-containing monomer include: carboxyl group-containing monomers such as (meth)acrylic acid, itaconic acid, maleic acid, fumaric acid, crotonic acid, and isocrotonic acid, or anhydrides thereof (for example, maleic anhydride); hydroxy group-containing monomers such as a hydroxyalkyl (meth) acrylate such as hydroxyethyl (meth)acrylate, hydroxypropyl (meth)acrylate, or hydroxybutyl (meth)acrylate, vinyl alcohol, and allyl alcohol; amide group-containing monomers such as (meth)acrylamide, N,N-dimethyl (meth)acrylamide, N-methylol (meth)acrylamide, N-methoxymethyl (meth)acrylamide, and N-butoxymethyl (meth)acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocycle-containing vinyl-based monomers such as N-vinyl-2-pyrrolidone and (meth)acryloyl morpholine, as well as N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate-based monomers such as methoxyethyl (meth)acrylate and ethoxyethyl (meth)acrylate; sulfonate group-containing monomers such as sodium vinyl sulfonate; phosphate group-containing monomers such as 2-hydroxyethyl acryloyl phosphate; imide group-containing monomers such as cyclohexyl maleimide and isopropyl maleimide; and isocyanate group-containing monomers such as 2-methacryloyloxyethyl isocyanate. The polar group-containing monomer is preferably a carboxyl group-containing monomer or an anhydride thereof, more preferably acrylic acid. It should be noted that the use of acrylic acid imparts hydrophilicity, resulting in, for example, an enhancement in pressure-sensitive adhesives trength for glass. Accordingly, acrylic acid is preferred for the improvement of the pressure-sensitive adhesive strength. However, there is a concern that the use of acrylic acid may corrode the metal of a sash part or the like. In addition, when a glycidyl ether-based cross-linking agent is used in combination with acrylic acid, there is such a risk that these components may react with each other to remarkably reduce the pressure-sensitive adhesive strength. Accordingly, when there is a concern about the corrosion of the metal or the reduction of the pressure-sensitive adhesive strength due to the reaction with the glycidyl ether-based cross-linking agent as described above, N-vinyl-2-pyrrolidone is preferably used. The use of N-vinyl-2-pyrrolidone, which can impart hydrophilicity, can enhance the pressure-sensitive adhesive strength for glass, can suppress the corrosion of the metal of the sash part or the like, and can suppress the reduction of the pressure-sensitive adhesive strength due to the reaction with the glycidyl ether-based cross-linking agent or the like.

Any other copolymerizable monomer may be used as a monomer component that can form the acrylic polymer. Any appropriate other copolymerizable monomer may be adopted as the other copolymerizable monomer. When the other copolymerizable monomer is adopted, the cohesive strength of the acrylic polymer can be improved, the pressure-sensitive adhesive strength of the acrylic polymer can be improved, or the refractive index thereof can be adjusted. The other copolymerizable monomers may be used alone or in combination.

Examples of the other copolymerizable monomer include: alkyl (meth)acrylates such as a (meth)acrylate having an aromatic hydrocarbon group such as benzyl (meth)acrylate or phenoxyethyl (meth)acrylate; vinyl esters such as vinyl acetate and vinyl propionate; aromatic vinyl compounds such as styrene and vinyl toluene; olefins or dienes such as ethylene, butadiene, isoprene, and isobutylene; vinyl ethers such as a vinyl alkyl ether; vinyl chloride; alkoxyalkyl (meth)acrylate-based monomers such as methoxyethyl (meth)acrylate and ethoxyethyl (meth)acrylate; sulfonate group-containing monomers such as sodium vinyl sulfonate; phosphate group-containingmonomers such as 2-hydroxyethyl acryloyl phosphate; imide group-containing monomers such as cyclohexylmaleimide and isopropylmaleimide; isocyanate group-containing monomers such as 2-methacryloyloxyethyl isocyanate; halogen-containing (meth)acrylates; and silicon atom-containing (meth)acrylates.

The weight-average molecular weight of the acrylic polymer is preferably 300,000 or more, more preferably 400, 000 to 3, 000, 000. The weight-average molecular weight of the acrylic polymer may be determined by a gel permeation chromatography method (GPC method).

For the adjustment of the refractive index, one or more kinds of high-refractive index materials selected from, but not limited to, for example, polymers each having a phenyl skeleton, a naphthyl skeleton, a biphenyl skeleton, a pyridinyl skeleton, a styrene skeleton, a naphthalene skeleton, a sulfone skeleton, a fluorene skeleton, a bisphenol A skeleton, a urethane skeleton, or an epoxy skeleton may be added.

In the transparent convertible pressure-sensitive adhesive agent of the present invention, a difference between the refractive index of each of the sinterable particles in the transparent convertible pressure-sensitive adhesive agent of the present invention and the refractive index of the polymer component in the transparent convertible pressure-sensitive adhesive agent of the present invention is preferably 0.02 or less, more preferably 0.01 or less, still more preferably 0.005 or less. When the difference between the refractive index of each of the sinterable particles in the transparent convertible pressure-sensitive adhesive agent of the present invention and the refractive index of the polymer component in the transparent convertible pressure-sensitive adhesive agent of the present invention falls within the range, such high transparency that the designs of the adherends are hardly impaired can be expressed.

The transparent convertible pressure-sensitive adhesive agent of the present invention may contain any appropriate other component except the antioxidant in addition to the sinterable particles and the polymer component as long as the effects of the present invention are not impaired. Such other components may be contained alone or in combination.

Examples of the other component include other polymer components, a softening agent, an age resistor, a curing agent, a plasticizer, a filler, a thermal polymerization initiator, a photopolymerization initiator, a UV absorbing agent, a light stabilizing agent, a coloring agent (e.g., a pigment or a dye), a solvent (organic solvent), a surfactant (e.g., an ionic surfactant, a silicone-based surfactant, or a fluorine-based surfactant), and a cross-linking agent (e.g., a polyisocyanate-based cross-linking agent, a silicone-based cross-linking agent, an epoxy-based cross-linking agent, or an alkyl etherified melamine-based cross-linking agent). It should be noted that the thermal polymerization initiator or the photopolymerization initiator may be contained in a material for forming the polymer component.

Any appropriate thermal polymerization initiator may be adopted as the thermal polymerization initiator. Examples of such thermal polymerization initiator include: peroxide-based polymerization initiators such as hydrogen peroxide, benzoyl peroxide, and t-butyl peroxide; and azo-based polymerization initiators such as 2,2'-azobis-2-methylpropionamidine acid salts, 2,2'-azobis-2,4-dimethylvaleronitrile, 2,2,'-azobis-N,N'-dimethyleneisobutylamidine acid salts, 2,2'-azobisisobutyronitrile, and 2,2'-azobis-2-methyl-N-(2-hydroxyethyl)propionamide. The thermal polymerization initiators may be used alone or in combination. Further, such thermal polymerization initiator may be used as a redox-type polymerization initiator by being used in combination with a reducing agent. Examples of such reducing agent include: ionic salts such as a sulfite, a hydrogensulfite, and iron, copper, and cobalt salts; amines such as triethanolamine; and reducing sugars such as an aldose and a ketose.

The content ratio of the thermal polymerization initiator in the transparent convertible pressure-sensitive adhesive agent of the present invention is preferably 5 parts by weight or less, more preferably 0.01 part by weight to 5 parts by weight, still more preferably 0.05 part by weight to 3 parts by weight with respect to the monomer components to be used for forming the polymer component of the transparent convertible pressure-sensitive adhesive agent.

Any appropriate photopolymerization initiator may be adopted as the photopolymerization initiator. Examples of such photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator. The photopolymerization initiators may be used alone or in combination.

An example of the ketal-based photopolymerization initiator is 2,2-dimethoxy-1,2-diphenylethan-1-one (such as "Irgacure 651" (trade name; manufactured by Ciba Speciality Chemicals Inc.)). Examples of the acetophenone-based photopolymerization initiator include 1-hydroxycyclohexyl phenyl ketone (such as "Irgacure 184" (trade name; manufactured by Ciba Speciality Chemicals Inc.)), 2,2-diethoxyacetophenone, 2,2-dimethoxy-2-phenylacetophenone, 4-phenoxydichloroacetophenone, and 4-(t-butyl)dichloroacetophenone. Examples of the benzoin ether-based photopolymerization initiator include benzoin methyl ether, benzoin ethyl ether, benzoin propyl ether, benzoin isopropyl ether, and benzoin isobutyl ether. An example of the acylphosphine oxide-based photopolymerization initiator is "Lucirin TPO" (trade name; manufactured by BASF). Examples of the α-ketol-based photopolymerization initiator include 2-methyl-2-hydroxy propiophenone and 1-[4-(2-hydroxyethyl)phenyl]-2-methylpropan-1-one. An example of the aromatic sulfonyl chloride-based photopolymerization initiator is 2-naphthalenesulfonyl chloride. An example of the photoactive oxime-based photopolymerization initiator is 1-phenyl-1,1-propanedione-2-(o-ethoxycarbonyl)-oxime. Examples of the benzoin-based photopolymerization initiator include benzoin. An example of the benzyl-based photopolymerization initiator is benzil. Examples of the benzophenone-based photopolymerization initiator include benzophenone, benzoylbenzoic acid, 3,3'-dimethyl-4-methoxybenzophenone, polyvinyl benzophenone, and α-hydroxycyclohexyl phenyl ketone. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The content ratio of the photopolymerization initiator in the transparent convertible pressure-sensitive adhesive agent of the present invention is preferably 5 parts by weight or less, more preferably 0.01 part by weight to 5 parts by weight, still more preferably 0.05 part by weight to 3 parts by weight with respect to the monomer components to be used for forming the polymer component in the transparent convertible pressure-sensitive adhesive agent.

The transparent convertible pressure-sensitive adhesive agent of the present invention has pressure-sensitive adhesive property before being sintered. Before being sintered, the transparent convertible pressure-sensitive adhesive agent of the present invention has a pressure-sensitive adhesive strength for a glass plate at a peel rate of 300 mm/min, a peel angle of 180°, and 23°C of preferably 0.1 N/10 mm to 15 N/10 mm, more preferably 0.5 N/10 mm to 10 N/10 mm, still more preferably 1 N/10 mm to 10 N/10 mm, particularly preferably 2 N/10 mm to 9 N/10 mm. When the pressure-sensitive adhesive strength falls within the range, the following appropriate pressure-sensitive adhesive property can be expressed: the transparent convertible pressure-sensitive adhesive agent allows adherends to be instantly fixed to each other, allows the adherends to be reattached to each other, and is excellent in processability such as being able to be cut into a sheet shape. A specific method of measuring the pressure-sensitive adhesive strength is described later.

The transparent convertible pressure-sensitive adhesive agent of the present invention has sinterability. Any appropriate temperature may be adopted as a sintering temperature depending on the kind and amount of the sinterable particles contained in the transparent convertible pressure-sensitive adhesive agent of the present invention.

The transparent convertible pressure-sensitive adhesive agent of the present invention may adopt any appropriate form. Examples of the form of the transparent convertible pressure-sensitive adhesive agent of the present invention include a sheet shape and a tape shape. When the form of the transparent convertible pressure-sensitive adhesive agent of the present invention has a sheet shape, the member may be used as a convertible pressure-sensitive adhesive sheet. The transparent convertible pressure-sensitive adhesive agent of the present invention may have such a form that a sheet-shaped or tape-shaped member is wound into a roll shape. In addition, the transparent convertible pressure-sensitive adhesive agent of the present invention may have such a form that sheet-shaped or tape-shaped members are laminated together.

In the case where the transparent convertible pressure-sensitive adhesive agent of the present invention has a sheet shape, its thickness is preferably 1 µm to 1,000 µm, more preferably 5 µm to 500 µm, still more preferably 10 µm to 300 µm, particularly preferably 20 µm to 200 µm. When the thickness in the case where the transparent convertible pressure-sensitive adhesive agent of the present invention has a sheet shape falls within the range, the convertible pressure-sensitive adhesive sheet is excellent in handleability.

The transparent convertible pressure-sensitive adhesive agent of the present invention may be produced by any appropriate method as long as a convertible pressure-sensitive adhesive agent containing the sinterable particles and the polymer component can be obtained by the production method.

As a preferred production method for the transparent convertible pressure-sensitive adhesive agent of the present invention, for example, there is given a method involving: partially polymerizing a polymerizable composition for forming the polymer component, the polymerizable composition containing the monomer components and any appropriate photopolymerization initiator, to prepare a polymerizable syrup; adding the sinterable particles to the polymerizable syrup, followed by uniform dispersion of the sinterable particles in the polymerizable syrup; then applying the dispersion onto any appropriate backing (such as a separator) ; and subjecting the resultant to photopolymerization (curing) by photoirradiation.

Any appropriate conditions may be adopted as conditions for the photoirradiation, such as a light source, irradiation energy, an irradiation method, and an irradiation time.

An active energy ray to be used in the photoirradiation is, for example, an ionizing radiation such as an α-ray, a β-ray, a γ-ray, a neutron beam, or an electron beam, or UV light. Of those, UV light is preferred.

Irradiation with the active energy ray is performed by using, for example, a black-light lamp, a chemical lamp, a high-pressure mercury lamp, or a metal halide lamp.

Heating may be performed in the polymerization. Any appropriate heating method may be adopted as a heating method. Examples of the heating method include a heating method involving using an electrothermal heater and a heating method involving using an electromagnetic wave such as an infrared ray.

### «High temperature-resistant pressure-sensitive adhesive agent»

A high temperature-resistant pressure-sensitive adhesive agent of the present invention has pressure-sensitive adhesive property, and has pressure-sensitive adhesive property or adhesive property after being exposed to high temperature. The high temperature-resistant pressure-sensitive adhesive agent of the present invention means a high temperature-resistant pressure-sensitive adhesive agent before being exposed to high temperature, which has pressure-sensitive adhesive property.

The high temperature-resistant pressure-sensitive adhesive agent of the present invention has a pressure-sensitive adhesive strength for glass at a peel rate of 50 mm/min, a peel angle of 180°, and 23°C of 1.0 N/10 mm or more, preferably 1.0 N/10 mm to 15 N/10 mm, more preferably 1.0 N/10 mm to 10 N/10 mm, still more preferably 1.0 N/10 mm to 8 N/10 mm, particularly preferably 1.5 N/10 mm to 6 N/10 mm. When the pressure-sensitive adhesive strength falls within the range, the high temperature-resistant pressure-sensitive adhesive agent can express such proper pressure-sensitive adhesive property as to allow adherends to be instantly fixed to each other, allow the adherends to be reattached to each other, and be excellent in processability such as being able to be cut into a sheet shape. A specific method of measuring the pressure-sensitive adhesive strength is described later.

The high temperature-resistant pressure-sensitive adhesive agent of the present invention has the following property. Under a state in which a glass plate A measuring 30 mm long by 30 mm wide by 3 mm thick and a glass plate B measuring 50 mm long by 30 mm wide by 3 mm thick are attached and fixed to each other with the pressure-sensitive adhesive agent having a size of 30 mm long by 30 mm wide in such a manner that the glass plates overlap each other in a region measuring 30 mm long by 30 mm wide, when the glass plate B is suspended with an end portion thereof where the glass plate A is not attached being fixed at a height of 150 mm, and is left at rest in a 400°C atmosphere for 30 minutes, the glass plate A does not fall. Details of the high-temperature (pressure-sensitive) adhesive property evaluating method are described later.

The high temperature-resistant pressure-sensitive adhesive agent of the present invention contains a polymer component.

The polymer component in the high temperature-resistant pressure-sensitive adhesive agent of the present invention preferably has a cross-linked structure. When the polymer component in the high temperature-resistant pressure-sensitive adhesive agent of the present invention has the cross-linked structure, the high temperature-resistant pressure-sensitive adhesive agent of the present invention can express extremely excellent heat resistance.

The cross-linked structure is the same as that described in the section <<Transparent convertible pressure-sensitive adhesive agent>>.

The content ratio of the polymer component in the high temperature-resistant pressure-sensitive adhesive agent of the present invention is preferably 20 wt% to 99 wt%, more preferably 30 wt% to 95 wt%, still more preferably 40 wt% to 90 wt%, particularly preferably 50 wt% to 80 wt% with respect to the solid content of the high temperature-resistant pressure-sensitive adhesive agent. When the content ratio of the polymer component in the high temperature-resistant pressure-sensitive adhesive agent of the present invention falls within the range, the high temperature-resistant pressure-sensitive adhesive agent of the present invention can sufficiently express the following effect: the high temperature-resistant pressure-sensitive adhesive agent is extremely hardly peeled from an adherend even when exposed to a high-temperature atmosphere such as one in a fire.

The polymer component in the high temperature-resistant pressure-sensitive adhesive agent of the present invention is the same as that described in the section <<Transparent convertible pressure-sensitive adhesive agent>>.

The high temperature-resistant pressure-sensitive adhesive agent of the present invention may contain inorganic particles.

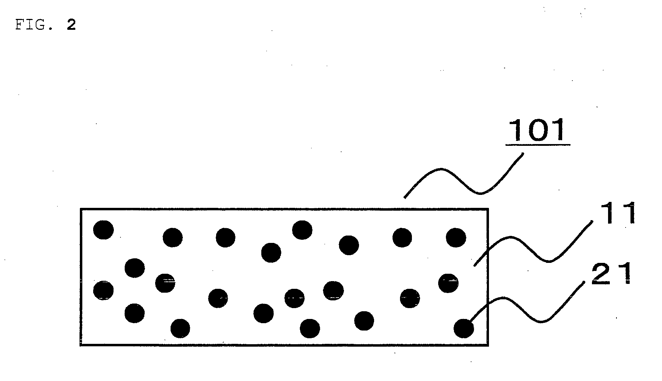

FIG. **2** is an example of a schematic sectional view of the high temperature-resistant pressure-sensitive adhesive agent of the present invention in the case where the high temperature-resistant pressure-sensitive adhesive agent contains the inorganic particles. A high temperature-resistant pressure-sensitive adhesive agent **101** of the present invention has inorganic particles **21** dispersed in a polymer component **11.**

In the case where the high temperature-resistant pressure-sensitive adhesive agent of the present invention contains the inorganic particles, the content ratio of the inorganic particles in the high temperature-resistant pressure-sensitive adhesive agent of the present invention is preferably 1 wt% to 80 wt%, more preferably 5 wt% to 70 wt%, still more preferably 10 wt% to 60 wt%, particularly preferably 20 wt% to 50 wt% with respect to the solid content of the high temperature-resistant pressure-sensitive adhesive agent. When the content ratio of the inorganic particles in the high temperature-resistant pressure-sensitive adhesive agent of the present invention falls within the range, there can be sufficiently expressed such an effect that the high temperature-resistant pressure-sensitive adhesive agent of the present invention is extremely hardly peeled from an adherend even when exposed to a high-temperature atmosphere such as one in a fire.

In the case where the high temperature-resistant pressure-sensitive adhesive agent of the present invention contains the inorganic particles, the inorganic particles in the high temperature-resistant pressure-sensitive adhesive agent of the present invention preferably contain two or more kinds of inorganic particles having different deformation points. When the inorganic particles in the high temperature-resistant pressure-sensitive adhesive agent of the present invention contain two or more kinds of inorganic particles having different deformation points, the high temperature-resistant pressure-sensitive adhesive agent of the present invention can express extremely excellent heat resistance.

The deformation point of each of the inorganic particles in the high temperature-resistant pressure-sensitive adhesive agent of the present invention is preferably 250 °C to 800 °C, more preferably 250°C to 700°C, still more preferably 250°C to 600°C, particularly preferably 250°C to 500°C. When the deformation point of each of the inorganic particles in the high temperature-resistant pressure-sensitive adhesive agent of the present invention falls within the range, there can be sufficiently expressed such an effect that the high temperature-resistant pressure-sensitive adhesive agent of the present invention is extremely hardly peeled from an adherend even when exposed to a high-temperature atmosphere such as one in a fire.

The deformation point of an inorganic particle having the lowest deformation point among the two or more kinds of inorganic particles having different deformation points is preferably 250°C to 800°C, more preferably 250°C to 700°C, still more preferably 250°C to 600°C, particularly preferably 250°C to 500°C. When the deformation point of the inorganic particle having the lowest deformation point falls within the range, the high temperature-resistant pressure-sensitive adhesive agent of the present invention can express extremely excellent heat resistance to an additional degree.

Any appropriate inorganic particles may be adopted as the inorganic particles. Such inorganic particles are preferably inorganic particles each formed of at least one kind of component selected from silicic acid, boric acid, borosilicic acid, aluminum oxide, calcium oxide, sodium oxide, lithium oxide, and phosphorus oxide. When such inorganic particles are adopted, there can be sufficiently expressed such an effect that the high temperature-resistant pressure-sensitive adhesive agent of the present invention is extremely hardly peeled from an adherend even when exposed to a high-temperature atmosphere such as one in a fire.

The average particle diameter of the inorganic particles in the high temperature-resistant pressure-sensitive adhesive agent of the present invention is preferably 0.1 µm to 1,000 µm, more preferably 0.5 µm to 500 µm, still more preferably 1 µm to 3.00 µm, particularly preferably 2 µm to 150 µm. When the average particle diameter of the inorganic particles in the high temperature-resistant pressure-sensitive adhesive agent of the present invention falls within the range, there can be sufficiently expressed such an effect that the high temperature-resistant pressure-sensitive adhesive agent of the present invention is extremely hardly peeled from an adherend even when exposed to a high-temperature atmosphere such as one in a fire.

The high temperature-resistant pressure-sensitive adhesive agent of the present invention preferably contains an antioxidant. When the high temperature-resistant pressure-sensitive adhesive agent of the present invention contains the antioxidant, the high temperature-resistant pressure-sensitive adhesive agent of the present invention can express extremely excellent heat resistance.

The content ratio of the antioxidant in the high temperature-resistant pressure-sensitive adhesive agent of the present invention is preferably 0.1 wt% to 10 wt%, more preferably 0.3 wt% to 8 wt%, still more preferably 0.5 wt% to 6 wt%, particularly preferably 0.7 wt% to 5 wt% with respect to the solid content of the high temperature-resistant pressure-sensitive adhesive agent. When the content ratio of the antioxidant falls within the range, the high temperature-resistant pressure-sensitive adhesive agent of the present invention can express extremely excellent heat resistance to an additional degree. The antioxidants may be used alone or in combination.

The antioxidant is the same as that described in the section

### <<Transparent convertible pressure-sensitive adhesive agent>>.

The high temperature-resistant pressure-sensitive adhesive agent of the present invention may contain any appropriate other component. Such other components may be contained alone or in combination.

The other component is the same as that described in the section

### <<Transparent convertible pressure-sensitive adhesive agent>>.

The high temperature-resistant pressure-sensitive adhesive agent of the present invention may adopt any appropriate form. Examples of the form of the high temperature-resistant pressure-sensitive adhesive agent of the present invention include a sheet shape and a tape shape. When the form of the high temperature-resistant pressure-sensitive adhesive agent of the present invention is a sheet shape, the high temperature-resistant pressure-sensitive adhesive agent may be used as a high temperature-resistant pressure-sensitive adhesive sheet. The high temperature-resistant pressure-sensitive adhesive agent of the present invention may have such a form that a sheet-shaped or tape-shaped one is wound into a roll shape. In addition, the high temperature-resistant pressure-sensitive adhesive agent of the present invention may have such a form that sheet-shaped or tape-shaped ones are laminated.

In the case where the high temperature-resistant pressure-sensitive adhesive agent of the present invention has a sheet shape, its thickness is preferably 1 µm to 1,000 µm, more preferably 5 µm to 500 µm, still more preferably 10 µm to 300 µm, particularly preferably 20 µm to 200 µm. When the thickness in the case where the high temperature-resistant pressure-sensitive adhesive agent of the present invention has a sheet shape falls within the range, the high temperature-resistant pressure-sensitive adhesive sheet is excellent in handleability.

The high temperature-resistant pressure-sensitive adhesive agent of the present invention may be produced by any appropriate method.

As a preferred production method for the high temperature-resistant pressure-sensitive adhesive agent of the present invention, there is given, for example, a method involving: partially polymerizing a polymerizable composition for forming the polymer component, which contains the monomer components and any appropriate photopolymerization initiator, to prepare a polymerizable syrup; adding the inorganic particles to the polymerizable syrup as required, followed by uniform dispersion of the particles in the syrup; then applying the dispersion onto any appropriate backing (such as a separator); and subjecting the resultant to photopolymerization (curing) by photoirradiation.

Any appropriate conditions may be adopted as conditions for the photoirradiation, such as a light source, irradiation energy, an irradiation method, and an irradiation time.

An active energy ray to be used in the photoirradiation is, for example, an ionizing radiation such as an α-ray, a β-ray, a γ-ray, a neutron beam, or an electron beam, or UV light. Of those, UV light is preferred.

Irradiation with the active energy ray is performed by using, for example, a black-light lamp, a chemical lamp, a high-pressure mercury lamp, or a metal halide lamp.

Heating may be performed in the polymerization. Any appropriate heating method may be adopted as a heating method. Examples of the heating method include a heating method involving using an electrothermal heater and a heating method involving using an electromagnetic wave such as an infrared ray.

### Examples

Hereinafter, the present invention is described in more detail by way of Examples, but the present invention is not limited to Examples shown below.

It should be noted that a biaxially stretched polyethylene terephthalate film having a thickness of 38 µm (trade name: "MRN38," manufactured by Mitsubishi Chemical Polyester Film) one surface of which had been subjected to a silicone-based release treatment was used as each of separators and cover separators used in the following respective examples. When various evaluations were performed, those separators and cover separators were peeled off as required.

### <Evaluation for pressure-sensitive adhesive property (Examples 1-1 to 1-7 and Comparative Examples 1-1 to 1-4)>

A sample having a width of 10 mm backed with a 25-µm PET film was brought into pressure contact with a standard glass plate with a 2-kg rubber roller while the roller was rolled from one end to the other and back at a speed of 300 mm/min. After 30 minutes from the pressure contact, the sample was evaluated for its pressure-sensitive adhesive strength by being pulled with a tensile tester at 23°C and a rate of pulling (peel rate) of 300 mm/min in a direction of 180°.

### <Evaluation for pressure-sensitive adhesive property (Examples 2-1 to 2-3, Examples 3-1 to 3-3, Comparative Examples 2-1, and Comparative Example 3-1)>

A sample having a width of 10 mm backed with a 25-µm PET film was brought into pressure contact with a standard stainless-steel plate with a 2-kg rubber roller while the roller was rolled from one end to the other and back at a speed of 300 mm/min. After 30 minutes from the pressure contact, the sample was evaluated for its pressure-sensitive adhesive strength by being pulled with a tensile tester at 23°C and a rate of pulling (peel rate) of 50 mm/min in a direction of 180°.

### <Evaluation for pressure-sensitive adhesive property (Example 4-1 and Comparative Example 4-1)>

A pressure-sensitive adhesive agent obtained in Example or Comparative Example was attached to a PET backing having a thickness of 25 µm, and the sample having a width of 10 mm was brought into pressure contact with glass (soda-lime glass, manufactured by Matsunami Glass Ind., Ltd., surface roughness Ra=0.23 nm) with a 2-kg rubber roller while the roller was rolled from one end to the other and back at a speed of 300 mm/min. After 30 minutes from the pressure contact, the sample was evaluated for its pressure-sensitive adhesive strength by being pulled with a tensile tester at 23°C and a rate of pulling (peel rate) of 50 mm/min in a direction of 180°.

### <Evaluation for refractive index>

Sinterable particles and polymer component in a convertible pressure-sensitive adhesive agent were evaluated for their respective refractive indices through the measurement of light having a wavelength of 589 nm with an Abbe refractometer (manufactured by ATAGO CO., LTD.).

### <Evaluation for transparency>

A total light transmittance and haze value in the case where a convertible pressure-sensitive adhesive agent was sandwiched between glass plates each having a thickness of 1 mm were measured with a haze meter (manufactured by MURAKAMI COLOR RESEARCH LABORATORY CO., LTD., "HM-150") in conformity with JIS K 7361.

### <Evaluation for design>

A glass plate having a thickness of 1 mm and an aluminum plate having a thickness of 0.5 mm were used as adherends, and an evaluation was made on whether or not the back of the aluminum plate could be clearly seen from the glass plate side when a convertible pressure-sensitive adhesive agent was sandwiched therebetween.
○: The back of the aluminum plate can be clearly seen.
×: The back of the aluminum plate cannot be clearly seen.

### <Check for peeling (evaluation for adhesive property after sintering)>

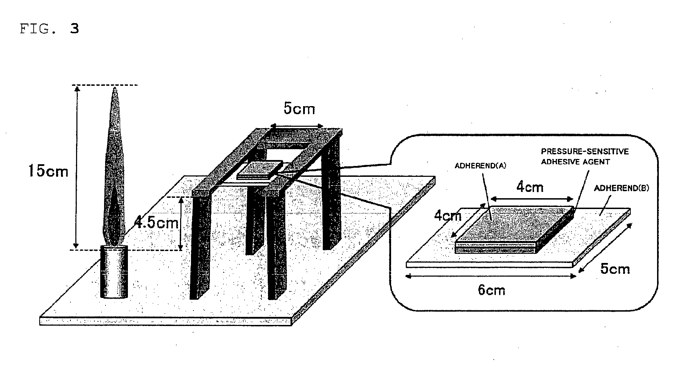

As illustrated in FIG. 3, each of convertible pressure-sensitive adhesive agents obtained in Examples and Comparative Examples was attached to an adherend (A) having a rectangular shape measuring 40 mm by 40 mm, and was further attached to the central region of an adherend (B) having a rectangular shape measuring 50 mm by 60 mm to produce a laminate (L). The laminate (L) was fixed so that the adherend (B) served as the lower surface and the laminate (L) was horizontal with respect to the test stand. The flame of a gas burner using a propane gas was adjusted to a luminous flame (orange flame), and the flame was adjusted so as to have a height of 150 mm. The gas burner was placed below the laminate so that the flame was brought into contact with the central portion of the adherend (B), and the test was continued for 3 minutes. After the test, an evaluation was made on whether or not the adherend (A) and the adherend (B) were peeled off when the sample returned to normal temperature. The laminate (L) after the test was allowed to free-fall onto a separately prepared glass plate from 5 cm above the plate in a perpendicular direction, and then a case where the adherend (A) and the adherend (B) were not peeled off was marked with symbol "○", and a case where at least one of the adherends was peeled off was marked with symbol "×".

The following combinations of the adherend (A) and the adherend (B) were adopted.
(1) adherend (A): glass (1 mm), adherend (B): glass (1 mm)
(2) adherend (A): glass (1 mm), adherend (B): aluminum (0.5 mm)
(3) adherend (A): aluminum (0.5 mm), adherend (B): aluminum (0.5 mm)
(4) adherend (A): glass cloth (0.1 mm), adherend (B): aluminum (0.5 mm)

### <Evaluations for high-temperature pressure-sensitive adhesive property and high-temperature adhesive property>

### (High-temperature pressure-sensitive adhesive property test*1)

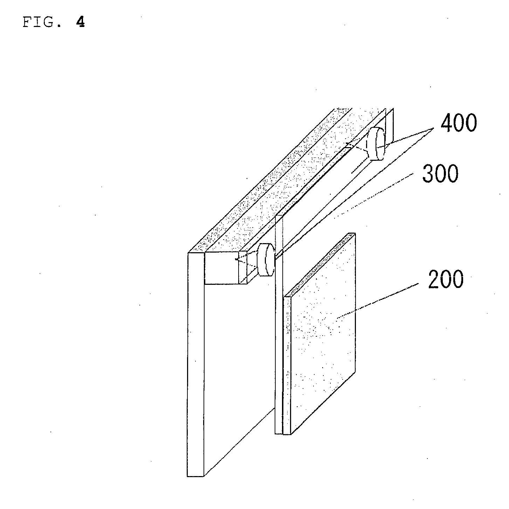

Each of convertible pressure-sensitive adhesive agents obtained in Examples and Reference Examples was cut into a piece measuring 30 mm by 50 mm, which was attached to a glass plate measuring 30 mm by 30 mm to produce a test body in which the convertible pressure-sensitive adhesive agent stuck out from the glass plate by 20 mm. As illustrated in FIG. 4, the test body was attached to a stainless-steel jig, and was further fixed between the jig and a stainless-steel plate with screws for fixation.

The test body fixed to the jig was put into an electric furnace held at 200°C, and was left at rest under a high-temperature atmosphere under the condition of a rate of temperature increase of 15°C/min for 10 minutes. After that, the test body was taken out, and the pressure-sensitive adhesive state of the test body and the glass plate was visually observed. Then, an evaluation was made by marking a case where the glass plate was not peeled from the test body with symbol "○", marking a case where less than a half of the glass plate was peeled from the test body with symbol "Δ", and marking a case where a half or more of the glass plate was peeled from the test body with symbol "×".

### (High-temperature adhesive property test*2)

A test body was produced using each of the convertible pressure-sensitive adhesive agents obtained in Examples and Reference Examples, and was fixed to a jig in the same manner as in the high-temperature pressure-sensitive adhesive property test*1. After that, the test body was put into an electric furnace held at 700°C, and was left at rest under a high-temperature atmosphere under the condition of a rate of temperature increase of 20°C/min for 10 minutes. After that, the test body was taken out, and the adhesive state of the test body and the glass plate was visually observed. Then, an evaluation was made by marking a case where the glass plate was not peeled from the test body with symbol "○", and marking a case where the glass plate was peeled from the test body with symbol "×".

### <Evaluation for high-temperature (pressure-sensitive) adhesive property>

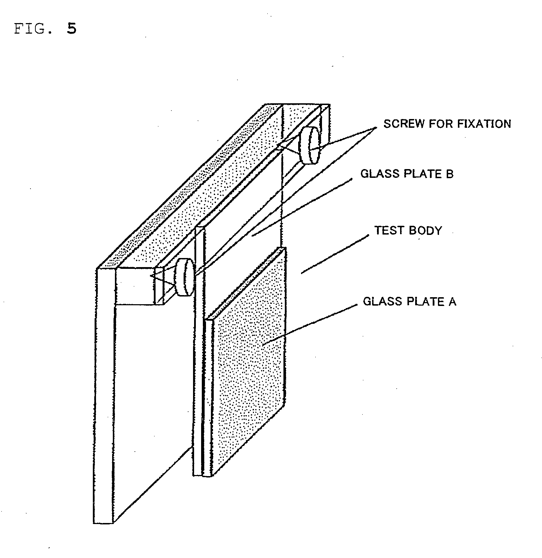

A pressure-sensitive adhesive agent obtained in Example or Comparative Example was cut to a size of 30 mm long by 30 mm wide. As illustrated in FIG. 5, under a state in which a glass plate A (soda-lime glass, manufactured by Matsunami Glass Ind., Ltd., surface roughness Ra=0.23 nm) measuring 30 mm long by 30 mm wide by 3 mm thick and a glass plate B (soda-lime glass, manufactured by Matsunami Glass Ind., Ltd., surface roughness Ra=0.23 nm) measuring 50 mm long by 30 mm wide by 3 mm thick were attached and fixed to each other with the pressure-sensitive adhesive agent in such a manner that the glass plates overlapped each other in a region measuring 30 mm long by 30 mm wide, the glass plate B was suspended with an end portion thereof where the glass plate A was not attached being fixed at a height of 150 mm with a stainless-steel jig. The test body fixed to the jig was put into an electric furnace held at 400°C, and was left at rest for 30 minutes. After that, the test body was taken out, and it was confirmed whether or not the glass plate A fell.
○: The glass plate A does not fall.
×: The glass plate A falls.

### <Evaluation for suppressive effect on shattering and falling of glass>

The pressure-sensitive adhesive agent obtained in Example or Comparative Example was attached to a glass cloth having a thickness of 100 µm, and the resultant was cut to a size of 100 mm long by 100 mm wide. The cut product was attached to a glass plate measuring 100 mm long by 100 mm wide by 3 mm thick to produce a test body. A blue flame having a height of 50 mm was emitted from a gas burner with a propane gas, and the flame was brought into contact with the glass cloth side of the test body in a state of being propped against a wall for 20 minutes. The glass in this case was observed with regard to its shattering and falling, and an evaluation was made on the basis of the following criteria.
○: The shattering and falling of the glass do not occur.
×: The shattering and falling of the glass occur.

### (Synthesis Example 1-1) (preparation of photopolymerizable syrup (1-A))

64.8 Parts by weight of 2-ethylhexyl acrylate, 7.2 parts by weight of acrylic acid, and 28 parts by weight of benzyl acrylate as monomer components, 0.05 part by weight of a photopolymerization initiator (trade name: "IRGACURE 651," manufactured by BASF), and 0.05 part by weight of a photopolymerization initiator (trade name: "IRGACURE 184," manufactured by BASF) were stirred in a four-necked separable flask equipped with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (1-A) as a partially polymerized composition having a rate of polymerization of 5% was prepared.

### (Synthesis Example 1-2) (preparation of photopolymerizable syrup (1-B))

64.8 Parts by weight of 2-ethylhexyl acrylate, 7.2 parts by weight of acrylic acid, and 28 parts by weight of phenoxyethyl acrylate as monomer components, 0.05 part by weight of a photopolymerization initiator (trade name: "IRGACURE 651," manufactured by BASF), and 0. 05 part by weight of a photopolymerization initiator (trade name: "IRGACURE 184, " manufactured by BASF) were stirred in a four-necked separable flask equipped with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (1-B) as a partially polymerized composition having a rate of polymerization of 5% was prepared.

### (Synthesis Example 1-3) (preparation of photopolymerizable syrup (1-C))

90 Parts by weight of 2-ethylhexyl acrylate and 10 parts by weight of acrylic acid as monomer components, 0.05 part by weight of a photopolymerization initiator (trade name: "IRGACURE 651," manufactured by BASF), and 0.05 part by weight of a photopolymerization initiator (trade name: "IRGACURE 184," manufactured by BASF) were stirred in a four-necked separable flask equipped with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (1-C) as a partially polymerized composition having a rate of polymerization of 5% was prepared.

### (Synthesis Example 1-4) (preparation of photopolymerizable syrup (1-D))

67 Parts by weight of 2-ethylhexyl acrylate, 14 parts by weight of N-vinylpyrrolidone, and 19 parts by weight of benzyl acrylate as monomer components, 0.05 part by weight of a photopolymerization initiator (trade name: "IRGACURE 651, " manufactured by BASF), and 0.05 part by weight of a photopolymerization initiator (trade name: ""IRGACURE 184," manufactured by BASF) were stirred in a four-necked separable flask equipped with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (1-D) as a partially polymerized composition having a rate of polymerization of 5% was prepared.

### (Synthesis Example 1-5) (preparation of tackifier (1-A))

100 Parts by weight of toluene, 60 parts by weight of dicyclopentanyl methacrylate (FA-513M, manufactured by Hitachi Chemical Co., Ltd.), 40 parts by weight of methyl methacrylate, and 3. 5 parts by weight of α-thioglycerol as a chain transfer agent were loaded into a four-necked flask. Then, the mixture was held at 70°C under a nitrogen atmosphere for 1 hour, and then 0.2 part by weight of azobisisobutyronitrile as a thermal polymerization initiator was loaded. The mixture was subjected to a reaction at 70°C for 2 hours, and then a reaction at 80°C for 2 hours. After that, the temperature of the reaction liquid was adjusted to 130°C, so that toluene, the chain transfer agent, and unreacted monomers were removed by drying to provide a tackifier (1-A) in solid form. The resultant tackifier (1-A) had a glass transition temperature of 144°C and a weight-average molecular weight of 4,300.

### (Example 1-1)

To 100 parts by weight of the photopolymerizable syrup (1-A) obtained in Synthesis Example 1-1 were added 0.1 part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (1-1) having a thickness of 150 µm was produced.

The resultant transparent convertible pressure-sensitive adhesive agent (1-1) was evaluated. Table 1 and Table 2 show the results.

### (Example 1-2)

To 100 parts by weight of the photopolymerizable syrup (1-A) obtained in Synthesis Example 1-1 were added 0.1 part by weight of 1,6-hexanediol diacrylate (HDDA) and 50 parts by weight of porcelain enamel frit (manufactured by TAKARA STANDARD CO., LTD., CY0098M1, deformation point: about 500°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (1-2) having a thickness of 150 µm was produced.

The resultant transparent convertible pressure-sensitive adhesive agent (1-2) was evaluated. Table 1 and Table 2 show the results.

### (Example 1-3)

To 100 parts by weight of the photopolymerizable syrup (1-A) obtained in Synthesis Example 1-1 were added 0.1 part by weight of 1,6-hexanediol diacrylate (HDDA) and 50 parts by weight of phosphoric acid-based frit (manufactured by TAKARA STANDARD CO., LTD., deformation point: 397°C, average particle diameter: 3 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (1-3) having a thickness of 150 µm was produced.

The resultant transparent convertible pressure-sensitive adhesive agent (1-3) was evaluated. Table 1 and Table 2 show the results.

### (Example 1-4)

To 100 parts by weight of the photopolymerizable syrup (1-A) obtained in Synthesis Example 1-1 were added 0.1 part by weight of 1,6-hexanediol diacrylate (HDDA) and 100 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (1-4) having a thickness of 150 µm was produced.

The resultant transparent convertible pressure-sensitive adhesive agent (1-4) was evaluated. Table 1 and Table 2 show the results.

### (Example 1-5)

To 100 parts by weight of the photopolymerizable syrup (1-B) obtained in Synthesis Example 1-2 were added 0.1 part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (1-5) having a thickness of 150 µm was produced.

The resultant transparent convertible pressure-sensitive adhesive agent (1-5) was evaluated. Table 1 and Table 2 show the results.

### (Example 1-6)

To 100 parts by weight of the photopolymerizable syrup (1-A) obtained in Synthesis Example 1-1 were added 0.1 part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 200 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (1-6) having a thickness of 200 µm was produced.

The resultant transparent convertible pressure-sensitive adhesive agent (1-6) was evaluated. Table 1 and Table 2 show the results.

### (Example 1-7)

To 100 parts by weight of the photopolymerizable syrup (1-D) obtained in Synthesis Example 1-4 were added 0.1 part by weight of 1,6-hexanediol diacrylate (HDDA), 10 parts by weight of 4-hydroxybutyl acrylate glycidyl ether (4HBAGE) (manufactured by Nippon Kasei Chemical Company Limited), 10 parts by weight of the tackifier (1-A) obtained in Synthesis Example 1-5, and 20 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (1-7) having a thickness of 150 µm was produced.

The resultant transparent convertible pressure-sensitive adhesive agent (1-7) was evaluated. Table 1 and Table 2 show the results.

### (Comparative Example 1-1)

To 100 parts by weight of the photopolymerizable syrup (1-C) obtained in Synthesis Example 1-3 were added 0.1 part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped convertible pressure-sensitive adhesive agent (1-C1) having a thickness of 150 µm was produced.

The resultant convertible pressure-sensitive adhesive agent (1- C1) was evaluated. Table 1 and Table 2 show the results.

### (Comparative Example 1-2)

To 100 parts by weight of the photopolymerizable syrup (1-A) obtained in Synthesis Example 1-1 was added 0.1 part by weight of 1,6-hexanediol diacrylate (HDDA), and the mixture was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the mixture. Thus, a sheet-shaped convertible pressure-sensitive adhesive agent (1-C2) having a thickness of 150 µm was produced.

The resultant transparent convertible pressure-sensitive adhesive agent (1-C2) was evaluated. Table 1 and Table 2 show the results.

### (Comparative Example 1-3)

To 100 parts by weight of the photopolymerizable syrup (1-A) obtained in Synthesis Example 1-1 were added 0.1 part by weight of 1, 6-hexanediol diacrylate (HDDA) and 50 parts by weight of organic fine particles (manufactured by Soken Chemical & Engineering Co., Ltd., MX-1000, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped convertible pressure-sensitive adhesive agent (1-C3) having a thickness of 150 µm was produced.

The resultant convertible pressure-sensitive adhesive agent (1-C3) was evaluated. Table 1 and Table 2 show the results.

### (Comparative Example 1-4)

To 100 parts by weight of toluene were added 50 parts by weight of phosphoric acid-based frit (manufactured by TAKARA STANDARD CO. , LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm, followed by drying. Thus, a sheet having a thickness of about 20 µm was produced.

No subsequent evaluation could be performed because the resultant sheet showed no pressure-sensitive adhesive property.

**[Table 1]**

| | Particles | | | | Polymer component | | Convertible pressure-sensitive adhesive agent | |
|---|---|---|---|---|---|---|---|---|
| | Deformation point (°C) | Average particle diameter (µm) | Addition amount of particles (parts by weight) | Refractive index | Kind | Refractive index | Sheet thickness (µm) | Pressure-sensitive adhesive strength (N/10mm) |
| Example 1-1 | 397 | 10 | 50 | 1.495 | Syrup (1-A) | 1.495 | 150 | 7.9 |
| Example 1-2 | 500 | 10 | 50 | 1.478 | Syrup (1-A) | 1.495 | 150 | 7.2 |
| Example 1-3 | 397 | 3 | 50 | 1.495 | Syrup (1-A) | 1.495 | 150 | 6.6 |
| Example 1-4 | 397 | 10 | 100 | 1.495 | Syrup (1-A) | 1.495 | 150 | 5.8 |
| Example 1-5 | 397 | 10 | 50 | 1.495 | Syrup (1-B) | 1.498 | 150 | 3.3 |
| Example 1-6 | 397 | 10 | 50 | 1.495 | Syrup (1-A) | 1.495 | 200 | 8.1 |
| Example 1-7 | 397 | 10 | 20 | 1.495 | Syrup (1-D) | 1.495 | 150 | 8.7 |
| Comparative Example 1-1 | 397 | 10 | 50 | 1.495 | Syrup (1-C) | 1.468 | 150 | 9.9 |
| Comparative Example 1-2 | - | - | - | - | Syrup (1-A) | 1.495 | 150 | 10.1 |
| Comparative Example 1-3 | - | 10 | 50 | - | (1-A) | 1.495 | 150 | 5.5 |
| Comparative Example 1-4 | 397 | 10 | 50 | 1.495 | - | - | 20 | - |

**[Table 2]**

| | Transparency | | Design | Adhesive property | | | | |
|---|---|---|---|---|---|---|---|---|
| | Total light transmittance (%) | Haze value | | Adherend (A) | Glass | Glass Aluminum | Aluminum | Glass cloth Aluminum |
| | | | | Adherend (B) | Glass | | Aluminum | |
| Example 1-1 | 91.7 | 3.8 | ○ | | ○ | ○ | ○ | ○ |
| Example 1-2 | 90.3 | 5.5 | ○ | | ○ | ○ | ○ | ○ |
| Example 1-3 | 91.9 | 2.2 | ○ | | ○ | ○ | ○ | ○ |
| Example 1-4 | 90.4 | 4.4 | ○ | | ○ | ○ | ○ | ○ |
| Example 1-5 | 90.5 | 4.5 | ○ | | ○ | ○ | ○ | ○ |
| Example 1-6 | 91.1 | 4.0 | ○ | | ○ | ○ | ○ | ○ |
| Example 1-7 | 91.7 | 2.4 | ○ | | ○ | ○ | ○ | ○ |
| Comparative Example 1-1 | 87.3 | 65.5 | × | | ○ | ○ | ○ | ○ |
| Comparative Example 1-2 | 91.6 | 0.7 | ○ | | × | × | × | × |
| Comparative Example 1-3 | 85.8 | 24.8 | × | | × | × | × | × |
| Comparative Example 1-4 | - | - | - | | - | - | - | - |

Each of the transparent convertible pressure-sensitive adhesive agents obtained in Examples 1-1 to 1-7 allowed adherends to be instantly fixed to each other, allowed the adherends to be reattached to each other, was excellent in processability such as being able to be cut into a sheet shape, was not peeled from the adherends even when exposed to a high-temperature atmosphere such as one in a fire, and had such transparency as to hardly impair the designs of the adherends.

The convertible pressure-sensitive adhesive agent obtained in Comparative Example 1-1 had a low total light transmittance, had a large haze value, and remarkably impaired the designs of the adherends.

The convertible pressure-sensitive adhesive agent obtained in Comparative Example 1-2 had remarkably reduced adhesive property after sintering.

The convertible pressure-sensitive adhesive agent obtained in Comparative Example 1-3 had a large haze value and impaired the designs of the adherends. In addition, the convertible pressure-sensitive adhesive agent obtained in Comparative Example 1-3 had remarkably reduced adhesive property after sintering.

### (Synthesis Example 2-1)

67 Parts by weight of 2-ethylhexyl acrylate, 14 parts by weight of N-vinylpyrrolidone, and 19 parts by weight of benzyl acrylate as monomer components, 0. 05 part by weight of a photopolymerization initiator (trade name: "IRGACURE 651," manufactured by BASF), and 0. 05 part by weight of a photopolymerization initiator (trade name: "IRGACURE 184, " manufactured by BASF) were stirred in a four-necked separable flask equipped with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (2-A) as a partially polymerized composition having a rate of polymerization of 5% was prepared.

### (Example 2-1)

To 100 parts by weight of the photopolymerizable syrup (A) obtained in Synthesis Example 2-1 were added 0.1 part by weight of 1,6-hexanediol diacrylate (HDDA), 10 parts by weight of 4-hydroxybutyl acrylate glycidyl ether (4HBAGE) (manufactured by Nippon Kasei Chemical Company Limited), 10 parts by weight of the tackifier (1-A) obtained in Synthesis Example 1-5, and 20 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (2-1) having a thickness of 150 µm was produced.

The resultant transparent convertible pressure-sensitive adhesive agent (2-1) was evaluated. Table 3 and Table 4 show the results.

### (Example 2-2)

To 100 parts by weight of the photopolymerizable syrup (2-A) obtained in Synthesis Example 2-1 were added 0.1 part by weight of 1,6-hexanediol diacrylate (HDDA), 50 parts by weight of 4-hydroxybutyl acrylate glycidyl ether (4HBAGE) (manufactured by Nippon Kasei Chemical Company Limited), 10 parts by weight of the tackifier (1-A) obtained in Synthesis Example 1-5, and 20 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (2-2) having a thickness of 150 µm was produced.

The resultant transparent convertible pressure-sensitive adhesive agent (2-2) was evaluated. Table 3 and Table 4 show the results.

### (Example 2-3)

To 100 parts by weight of the photopolymerizable syrup (2-A) obtained in Synthesis Example 2-1 were added 0.1 part by weight of 1, 6-hexanediol diacrylate (HDDA), 3 parts by weight of urethane acrylate (trade name: "EBECRYL 9260," manufactured by Daicel-Cytec Company Ltd.), 10 parts by weight of the tackifier (1-A) obtained in Synthesis Example 1-5, and 20 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (2-3) having a thickness of 150 µm was produced.

The resultant transparent convertible pressure-sensitive adhesive agent (2-3) was evaluated. Table 3 and Table 4 show the results.

### (Reference Example 2-1)

To 100 parts by weight of the photopolymerizable syrup (2-A) obtained in Synthesis Example 2-1 were added 0.1 part by weight of 1,6-hexanediol diacrylate (HDDA), 10 parts by weight of the tackifier (1-A) obtained in Synthesis Example 1-5, and 20 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped convertible pressure-sensitive adhesive agent (2-C1) having a thickness of 150 µm was produced.

The resultant convertible pressure-sensitive adhesive agent (2-C1) was evaluated. Table 3 and Table 4 show the results.

**[Table 3]**

| | Particles | | | | Polymer component | | Convertible pressure-sensitive adhesive agent | |
|---|---|---|---|---|---|---|---|---|
| | Deformation point (°C) | Average particle diameter (µm) | Addition amount of particles (parts by weight) | Refractive index | Kind | Refractive index | Sheet thickness (µm) | Pressure-sensitive adhesive strength (N/10mm) |
| Example 2-1 | 397 | 10 | 20 | 1.495 | Syrup (2-A) | 1.495 | 150 | 8.7 |
| Example 2-2 | 397 | 10 | 20 | 1.495 | Syrup (2-A) | 1.495 | 150 | 7.6 |
| Example 2-3 | 397 | 10 | 20 | 1.495 | Syrup (2-A) | 1.495 | 150 | 6.5 |
| Reference Example 2-1 | 397 | 10 | 20 | 1.495 | Syrup (2-A) | 1.495 | 150 | 7.9 |

**[Table 4]**

| | Cross-linking agent component | | | Transparency | | Design | Evaluations for high-temperature pressure-sensitive adhesive property and high-temperature adhesive property | |
|---|---|---|---|---|---|---|---|---|
| | HDDA (part (s) by weight) | 4HBAGE (part(s) by weight) | EBECRYL 9260 (part(s) by weight) | Total light transmittance (%) | Haze value | | High-temperature pressure-sensitive adhesive property test*1 | High-temperature adhesive property test*2 |
| Example 2-1 | 0.1 | 10 | - | 91.7 | 2.4 | ○ | ○ | ○ |
| Example 2-2 | 0.1 | 50 | - | 90.3 | 5.5 | ○ | ○ | ○ |
| Example 2-3 | 0.1 | - | 3 | 91.2 | 4.0 | ○ | Δ | ○ |
| Reference Example 2-1 | 0.1 | - | - | 91.7 | 2.5 | ○ | × | × |

It was confirmed that each of the transparent convertible pressure-sensitive adhesive agents obtained in Examples 2-1 to 2-3 was hardly peeled from the glass plate even when exposed to a high temperature of 200°C, and was not peeled from the glass plate even when exposed to a higher temperature of 700°C. On the other hand, it was confirmed that the convertible pressure-sensitive adhesive agent obtained in Reference Example 2-1 was peeled from a half or more of the glass plate when exposed to a high temperature of 200°C, and was completely peeled from the glass plate when exposed to a higher temperature of 700°C. It is found that each of the transparent convertible pressure-sensitive adhesive agents obtained in Examples 2-1 to 2-3 has such transparency as to hardly impair the designs of adherends, allows the adherends to be instantly fixed to each other, allows the adherends to be reattached to each other, is excellent in processability such as being able to be cut into a sheet shape, is not peeled from the adherends even when exposed to a high-temperature atmosphere such as one in a fire, and is extremely excellent in heat resistance.

### (Example 3-1)

To 100 parts by weight of the photopolymerizable syrup (2-A) obtained in Synthesis Example 2-1 were added 0.1 part by weight of 1,6-hexanediol diacrylate (HDDA), 10 parts by weight of the tackifier (1-A) obtained in Synthesis Example 1-5, 20 parts by weight of phosphoric acid-based frit (manufactured by TAKARA STANDARD CO., LTD., VY0144, deformation point: 397°C, average particle diameter: 10 µm), and 1 part by weight of an amino ether-based antioxidant (trade name: "TINUVIN 123," manufactured by BASF), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (3-1) having a thickness of 150 µm was produced.

The resultant transparent convertible pressure-sensitive adhesive agent (3-1) was evaluated. Table 5 and Table 6 show the results.

### (Example 3-2)

To 100 parts by weight of the photopolymerizable syrup (2-A) obtained in Synthesis Example 2-1 were added 0.1 part by weight of 1,6-hexanediol diacrylate (HDDA), 10 parts by weight of the tackifier (1-A) obtained in Synthesis Example 1-5, 20 parts by weight of phosphoric acid-based frit (manufactured by TAKARA STANDARD CO., LTD., VY0144, deformation point: 397°C, average particle diameter: 10 µm), and 3 parts by weight of an amino ether-based antioxidant (trade name: "TINUVIN 123," manufactured by BASF), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (3-2) having a thickness of 150 µm was produced.

The resultant transparent convertible pressure-sensitive adhesive agent (3-2) was evaluated. Table 5 and Table 6 show the results.

### (Example 3-3)

To 100 parts by weight of the photopolymerizable syrup (2-A) obtained in Synthesis Example 2-1 were added 0.1 part by weight of 1,6-hexanediol diacrylate (HDDA), 10 parts by weight of the tackifier (1-A) obtained in Synthesis Example 1-5, 20 parts by weight of phosphoric acid-based frit (manufactured by TAKARA STANDARD CO., LTD., VY0144, deformation point: 397°C, average particle diameter: 10 µm), and 1 part by weight of a phenol-based antioxidant (trade name: "IRGANOX 1010," manufactured by BASF), and the mixture was uniformly dispersed with a disper. The resultant dispersion was applied onto the peel-treated surface of a separator so as to have a thickness of 150 µm. A cover separator was attached thereto, and UV light (illuminance: 5 mW/cm²) was applied to the resultant by using a black-light lamp as a light source for 5 minutes to cure the dispersion. Thus, a sheet-shaped transparent convertible pressure-sensitive adhesive agent (3-3) having a thickness of 150 µm was produced.

The resultant transparent convertible pressure-sensitive adhesive agent (3-3) was evaluated. Table 5 and Table 6 show the results.

### (Reference Example 3-1)

The convertible pressure-sensitive adhesive agent (2-C1) obtained in Reference Example 2-1 was defined as a convertible pressure-sensitive adhesive agent (3-C1).

The resultant convertible pressure-sensitive adhesive agent (3-C1) was evaluated. Table 5 and Table 6 show the results.

**[Table 5]**

| | Particles | | | | Polymer component | | Convertible pressure-sensitive adhesive agent | |
|---|---|---|---|---|---|---|---|---|
| | Deformation point (°C) | Average particle diameter (µm) | Addition amount of particles (parts by weight) | Refractive index | Kind | Refractive index | Sheet thickness (µm) | Pressure-sensitive adhesive strength (N/10mm) |
| Example 3-1 | 397 | 10 | 20 | 1.495 | Syrup (2-A) | 1.495 | 150 | 7.9 |
| Example 3-2 | 397 | 10 | 20 | 1.495 | Syrup (2-A) | 1.495 | 150 | 7.7 |
| Example 3-3 | 397 | 10 | 20 | 1.495 | Syrup (2-A) | 1.495 | 150 | 7.8 |
| Reference Example 3-1 | 397 | 10 | 20 | 1.495 | Syrup (2-A) | 1.495 | 150 | 7.9 |

**[Table 6]**

| | Antioxidant | | Transparency | | Design | Evaluations for high-temperature pressure-sensitive adhesive property and high-temperature adhesive property | |
|---|---|---|---|---|---|---|---|
| | Kind | Part (s) by weight | Total light transmittance (%) | Haze value | | High-temperature pressure-sensitive adhesive property test*1 | High-temperature adhesive property test*2 |
| Example 3-1 | TINUVIN 123 | 1 | 91.2 | 4.4 | ○ | ○ | ○ |
| Example 3-2 | TINUVIN 123 | 3 | 88.8 | 6.3 | ○ | ○ | ○ |
| Example 3-3 | IRGANOX 1010 | 1 | 90.1 | 5.8 | ○ | ○ | ○ |
| Reference Example 3-1 | None | - | 91.7 | 2.5 | ○ | × | × |

It was confirmed that each of the transparent convertible pressure-sensitive adhesive agents obtained in Examples 3-1 to 3-3 was hardly peeled from the glass plate even when exposed to a high temperature of 200°C, and was not peeled from the glass plate even when exposed to a higher temperature of 700°C. On the other hand, it was confirmed that the convertible pressure-sensitive adhesive agent obtained in Reference Example 3-1 was peeled from a half or more of the glass plate when exposed to a high temperature of 200°C, and was completely peeled from the glass plate when exposed to a higher temperature of 700°C. It is found that each of the transparent convertible pressure-sensitive adhesive agents obtained in Examples 3-1 to 3-3 has such transparency as to hardly impair the designs of adherends, allows the adherends to be instantly fixed to each other, allows the adherends to be reattached to each other, is excellent in processability such as being able to be cut into a sheet shape, is not peeled from the adherends even when exposed to a high-temperature atmosphere such as one in a fire, and is extremely excellent in heat resistance.

### (Synthesis Example 4-1) (preparation of photopolymerizable syrup (4-A))

86 Parts by weight of 2-ethylhexyl acrylate and 14 parts by weight of 1-vinyl-2-pyrrolidone as monomer components, 0.05 part by weight of a photopolymerization initiator (trade name: "IRGACURE 651," manufactured by BASF), and 0.05 part by weight of a photopolymerization initiator (trade name: "IRGACURE 184," manufactured by BASF) were stirred in a four-necked separable flask equipped with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (4-A) as a partially polymerized composition having a rate of polymerization of 3.5 % was prepared.

### (Example 4-1)

To 100 parts by weight of the photopolymerizable syrup (4-A) obtained in Synthesis Example 4-1 were added 0.1 part by weight of 1,6-hexanediol diacrylate (HDDA), 10 parts by weight of 4-hydroxybutyl acrylate glycidyl ether, and 50 parts by weight of phosphoric acid-based frit (manufactured by TAKARA STANDARD CO., LTD., VY0144, deformation point: 397°C, average particle diameter: 10 µm), and the mixture was uniformly dispersed with a disper. The resultant dispersion was applied onto the peel-treated surface of a separator so as to have a thickness of 100 µm. A cover separator was attached thereto, and UV light (illuminance: 5 mW/cm²) was applied to the resultant by using a black-light lamp as a light source for 5 minutes to cure the dispersion. Thus, a sheet-shaped pressure-sensitive adhesive agent (4-1) having a thickness of 100 µm was produced. Table 7 shows the results.

### (Comparative Example 4-1)

To 100 parts by weight of the photopolymerizable syrup (4-A) obtained in Synthesis Example 4-1 were added 0.1 part by weight of 1,6-hexanediol diacrylate (HDDA) and 10 parts by weight of 4-hydroxybutyl acrylate glycidyl ether, and the mixture was applied onto the peel-treated surface of a separator so as to have a thickness of 100 µm. A cover separator was attached thereto, and UV light (illuminance: 5 mW/cm²) was applied to the resultant by using a black-light lamp as a light source for 5 minutes to cure the mixture. Thus, a sheet-shaped pressure-sensitive adhesive agent (4-C1) having a thickness of 100 µm was produced. Table 7 shows the results.

**[Table 7]**

| | Inorganic particles | Evaluations | | |
|---|---|---|---|---|
| | | Pressure-sensi tive adhesive strength (N/10mm) | High-temperature (pressure-sensitive ) adhesive property | Suppressive effect on shattering and falling of glass |
| Example 4-1 | Present | 1.8 | ○ | ○ |
| Comparative Example 4-1 | Absent | 3.3 | × | × |

The pressure-sensitive adhesive agent obtained in Example 4-1 allows adherends to be instantly fixed to each other and is not peeled from the adherends even when exposed to a high-temperature atmosphere.

### Industrial Applicability

The transparent convertible pressure-sensitive adhesive agent of the present invention allows adherends to be instantly fixed to each other, allows the adherends to be reattached to each other, and is not peeled from the adherends even when exposed to a high-temperature atmosphere such as one in a fire. In addition, the polymer component that may be contained in the transparent convertible pressure-sensitive adhesive agent of the present invention can be designed to impart extremely excellent heat resistance to the transparent convertible pressure-sensitive adhesive agent. Therefore, the transparent convertible pressure-sensitive adhesive agent of the present invention can be effectively utilized not only in an application involving no exposure to a high-temperature atmosphere, but also in an application involving exposure to a high-temperature atmosphere.

Further, the transparent convertible pressure-sensitive adhesive agent of the present invention has extremely excellent transparency. Therefore, the transparent convertible pressure-sensitive adhesive agent of the present invention, when attached to an adherend, does not impair the design of the adherend.

The high temperature-resistant pressure-sensitive adhesive agent of the present invention allows adherends to be instantly fixed to each other, and is not peeled from the adherends even when exposed to a high-temperature atmosphere such as one in a fire. Therefore, the high temperature-resistant pressure-sensitive adhesive agent of the present invention can be effectively utilized not only in an application involving no exposure to a high-temperature atmosphere, but also in an application involving exposure to a high-temperature atmosphere.

The transparent convertible pressure-sensitive adhesive agent and high temperature-resistant pressure-sensitive adhesive agent of the present invention can each be suitably used, for example, as a building material in each of an outer wall material, an outer wall trimmaterial, an inner wall material, an inner wall trimmaterial, an wall insulation material, a ceiling material, a ceiling trim material, a roofingmaterial, a floormaterial, a floor trimmaterial, a partition material, a wall material, floor material, and ceiling material for a bathroom and trim materials therefor, a wall material, floor material, and ceiling material for a kitchen and trim materials therefor, a wall material, floor material, and ceiling material for a lavatory and trim materials therefor, a pillar material and a pillar protection material, and an inner material, surface trim material, partition material, and curtain for a lavatory, room, and various doors such as a front door and a sliding door, in particular, a wall material and ceiling material for a kitchen, and a partition for a clean room, in general housing including wooden housing based on a conventional construction method, a light-frame construction method, or the like, reinforced concrete housing, steel construction housing of light-gauge steel construction or heavy-gauge steel construction, and prefabricated housing, complex housing such as a super high-rise condominium, a high-rise condominium, a mid-rise or low-rise condominium, and an apartment building, and large building structures and public facilities such as a cafe, a restaurant, an office building, a department store, a supermarket, an indoor parking lot, a movie theater, a hotel, various sports facilities, a gymnasium, a concert hall, a domed baseball stadium or soccer stadium, an indoor soccer stadium, an indoor pool, and a factory building. In addition, the agents can each be used in, for example, an inner material or surface trim material for fire preventive equipment such as an exhaust duct, a fire door, or a fire shutter, a surface trim material for furniture such as a table, a surface trim material for a door, a surface trim material for window glass, a surface trim material for furniture such as a table, a shatterproofing material or surface trim material for window glass, a mirror, a tile, or the like, a surface trimmaterial for a signboard or digital signage, or a roll screen. In addition, the agents can each be used in a body protective material, inner or outer wall material, ceiling material, roofing material, or floor material for a ship, aircraft, automobile, or railway vehicle, a surface protective material for a printed matter to be attached to the inside or outside of a railway vehicle, a surface protective material for an inkjet media material, an outer protective material or inner protective material for a solar cell, a protective material for a battery such as a lithium ion battery, or an electrical and electronic device member such as a partition inside an electrical device. Further, the agents can each also be used as a peripheral tool for an ash tray, a surface trim material for a garbage can, or a protective material for the front panel or chassis of a pachinko machine.

### Reference Signs List

- **10**: polymer component
- **20**: sinterable particle
- **100**: convertible pressure-sensitive adhesive agent
- **200**: glass plate
- **300**: test body
- **400**: screw for fixation
- **11**: polymer component
- **21**: inorganic particle
- **101**: high temperature-resistant pressure-sensitive adhesive agent

## Claims

1. A transparent pressure-sensitive adhesive agent convertible into an adhesive agent, which has pressure-sensitive adhesive property before being sintered, and which has adhesive property after being sintered.

2. A transparent pressure-sensitive adhesive agent convertible into an adhesive agent according to claim 1, wherein the transparent pressure-sensitive adhesive agent convertible into an adhesive agent comprises sinterable particles and a polymer component.

3. A transparent pressure-sensitive adhesive agent convertible into an adhesive agent according to claim 2, wherein a difference between a refractive index of each of the sinterable particles and a refractive index of the polymer component is 0.02 or less.

4. A transparent pressure-sensitive adhesive agent convertible into an adhesive agent according to claim 2 or 3, wherein the sinterable particles each have a deformation point of 250°C to 800°C.

5. A transparent pressure-sensitive adhesive agent convertible into an adhesive agent according to any one of claims 2 to 4, wherein the sinterable particles are each formed of at least one kind of component selected from silicic acid, boric acid, borosilicic acid, aluminum oxide, calcium oxide, sodium oxide, lithium oxide, and phosphorus oxide.

6. A transparent pressure-sensitive adhesive agent convertible into an adhesive agent according to any one of claims 2 to 5, wherein the sinterable particles have an average particle diameter of 0.1 µm to 1,000 µm.

7. A transparent pressure-sensitive adhesive agent convertible into an adhesive agent according to any one of claims 2 to 6, wherein a content ratio of the sinterable particles is 1 wt% to 150 wt% with respect to a solid content of the transparent pressure-sensitive adhesive agent convertible into an adhesive agent.

8. A transparent pressure-sensitive adhesive agent convertible into an adhesive agent according to any one of claims 2 to 7, wherein the polymer component comprises at least one kind of component selected from a rubber-based polymer, a silicone-based polymer, and an acrylic polymer.

9. A transparent pressure-sensitive adhesive agent convertible into an adhesive agent according to any one of claims 2 to 8, wherein the polymer component has a cross-linked structure.

10. A transparent pressure-sensitive adhesive agent convertible into an adhesive agent according to claim 9, wherein all monomer components for forming the polymer component contain a cross-linking monomer at a content ratio of 2.0 wt% to 60 wt%.

11. A transparent pressure-sensitive adhesive agent convertible into an adhesive agent according to claim 10, wherein the cross-linking monomer has at least one kind of functional group selected from an acryloyl group, an epoxy group, an isocyanate group, a carboxyl group, a hydroxyl group, a vinyl group, and an amino group.

12. A transparent pressure-sensitive adhesive agent convertible into an adhesive agent according to any one of claims 2 to 11, wherein the polymer component contains an antioxidant.

13. A transparent pressure-sensitive adhesive agent convertible into an adhesive agent according to claim 12, wherein a content ratio of the antioxidant is 0.1 wt% to 10 wt% with respect to a solid content of the transparent pressure-sensitive adhesive agent convertible into an adhesive agent.

14. A transparent pressure-sensitive adhesive agent convertible into an adhesive agent according to claim 12 or 13, wherein the antioxidant comprises at least one kind selected from a phenol-based antioxidant, an amine-based antioxidant, an amino ether-based antioxidant, and a phosphorus-based antioxidant.

15. A transparent pressure-sensitive adhesive agent convertible into an adhesive agent according to any one of claims 1 to 14, wherein the transparent pressure-sensitive adhesive agent convertible into an adhesive agent has a total light transmittance of 80% or more.

16. A transparent pressure-sensitive adhesive agent convertible into an adhesive agent according to any one of claims 1 to 15, wherein the transparent pressure-sensitive adhesive agent convertible into an adhesive agent has a haze value of 30 or less.

17. A transparent pressure-sensitive adhesive agent convertible into an adhesive agent according to any one of claims 1 to 16, wherein the transparent pressure-sensitive adhesive agent convertible into an adhesive agent has a sheet shape.

18. A transparent pressure-sensitive adhesive agent convertible into an adhesive agent according to claim 17, wherein the transparent pressure-sensitive adhesive agent convertible into an adhesive agent has a thickness of 1 µm to 1,000 µm.

19. A transparent pressure-sensitive adhesive agent convertible into an adhesive agent according to any one of claims 2 to 18, wherein a material for forming the polymer component contains a photopolymerization initiator.

20. A transparent pressure-sensitive adhesive agent convertible into an adhesive agent according to any one of claims 1 to 19, wherein the transparent pressure-sensitive adhesive agent convertible into an adhesive agent is obtained through photopolymerization.

21. A production method for the transparent pressure-sensitive adhesive agent convertible into an adhesive agent according to any one of claims 1 to 20, the production method comprising:
partially polymerizing a polymerizable composition for forming a polymer component, the polymerizable composition containing a monomer component and a photopolymerization initiator, to prepare a polymerizable syrup;
adding sinterable particles to the polymerizable syrup, followed by uniform dispersion of the sinterable particles in the polymerizable syrup; and
curing the dispersion through photopolymerization by photoirradiation.

22. A high temperature-resistant pressure-sensitive adhesive agent, comprising a polymer component, wherein:
the high temperature-resistant pressure-sensitive adhesive agent has a pressure-sensitive adhesive strength for glass at 23°C of 1.0 N/10 mm or more; and
under a state in which a glass plate A measuring 30 mm long by 30 mm wide by 3 mm thick and a glass plate B measuring 50 mm long by 30 mm wide by 3 mm thick are attached and fixed to each other with the high temperature-resistant pressure-sensitive adhesive agent having a size of 30 mm long by 30 mm wide in such a manner that the glass plate A and the glass plate B overlap each other in a region measuring 30 mm long by 30 mm wide, when the glass plate B is suspended with an end portion thereof where the glass plate A is not attached being fixed at a height of 150 mm, and is left at rest in a 400°C atmosphere for 30 minutes, the glass plate A does not fall.

23. A high temperature-resistant pressure-sensitive adhesive agent according to claim 22, wherein the polymer component comprises at least one kind selected from a rubber-based polymer, a silicone-based polymer, and an acrylic polymer.

24. A high temperature-resistant pressure-sensitive adhesive agent according to claim 22 or 23, wherein a material for forming the polymer component contains a photopolymerization initiator.

25. A high temperature-resistant pressure-sensitive adhesive agent according to any one of claims 22 to 24, further comprising inorganic particles.

26. A high temperature-resistant pressure-sensitive adhesive agent according to any one of claims 22 to 25, wherein the high temperature-resistant pressure-sensitive adhesive agent has a sheet shape.

27. A high temperature-resistant pressure-sensitive adhesive agent according to claim 26, wherein the high temperature-resistant pressure-sensitive adhesive agent has a thickness of 1 µm to 1,000 µm.

28. A high temperature-resistant pressure-sensitive adhesive agent according to any one of claims 22 to 27, wherein the high temperature-resistant pressure-sensitive adhesive agent is obtained through photopolymerization.
